(19)

**Europäisches Patentamt**

**European Patent Office**

**Office européen des brevets**

(11)  **EP 2 216 950 A1**

(12) **EUROPEAN PATENT APPLICATION**
published in accordance with Art. 153(4) EPC

(43) Date of publication:
**11.08.2010 Bulletin 2010/32**

(51) Int Cl.:
*H04L 27/02* *(2006.01)*

(21) Application number: **08855273.2**

(22) Date of filing: **27.11.2008**

(86) International application number:
**PCT/JP2008/003505**

(87) International publication number:
**WO 2009/069306 (04.06.2009 Gazette 2009/23)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **30.11.2007  JP 2007311624**
**31.01.2008  JP 2008021786**

(71) Applicant: **Panasonic Corporation**
**Kadoma-shi**
**Osaka 571-8501 (JP)**

(72) Inventors:
 • **SAKAMOTO, Takenori**
   **Osaka 540-6207 (JP)**
 • **MATSUMOTO, Taisuke**
   **Osaka 540-6207 (JP)**
 • **HASAKO, Satoshi**
   **Osaka 540-6207 (JP)**
 • **FUJITA, Suguru**
   **Osaka 540-6207 (JP)**
 • **KOBAYASHI, Masashi**
   **Osaka 540-6207 (JP)**
 • **YU, Zhan**
   **Osaka 540-6207 (JP)**

(74) Representative: **Grünecker, Kinkeldey,**
**Stockmair & Schwanhäusser**
**Anwaltssozietät**
**Leopoldstrasse 4**
**80802 München (DE)**

(54) **WIRELESS COMMUNICATION METHOD, RADIO TRANSMITTER APPARATUS AND RADIO RECEIVER APPARATUS**

(57)    A wireless communication method, a radio transmitter apparatus and a radio receiver apparatus wherein a signal sequence, which is used in a reception process using a first modulation scheme and can be generated from a signal sequence prepared for a reception process and used in a second modulation scheme, is employed, thereby achieving a performance to a similar extent to the reception process performance using the second modulation scheme. A radio transmitter apparatus (20) uses a first modulation scheme (e.g., OOK modulation scheme) to sequentially transmit, as a first sequence, both a sub-sequence a1(n), which is identical with a second sequence a(n) designed for use in a second modulation scheme (e.g., BPSK modulation scheme), and a sub-sequence a2(n), the bits of which are reverse to those of the second sequence a(n), in a time division manner. A radio receiver apparatus (30) detects the sub-sequence a1(n) and sub-sequence a2(n) in a received signal to send the detection result to the following stage for a signal processing.

FIG.2

**Description**

Technical Field

The present invention relates to a radio communication method, radio transmitting apparatus and radio receiving apparatus.

Background Art

In wireless communication networks, synchronization and channel estimation are important for detecting signals correctly in a receiver.

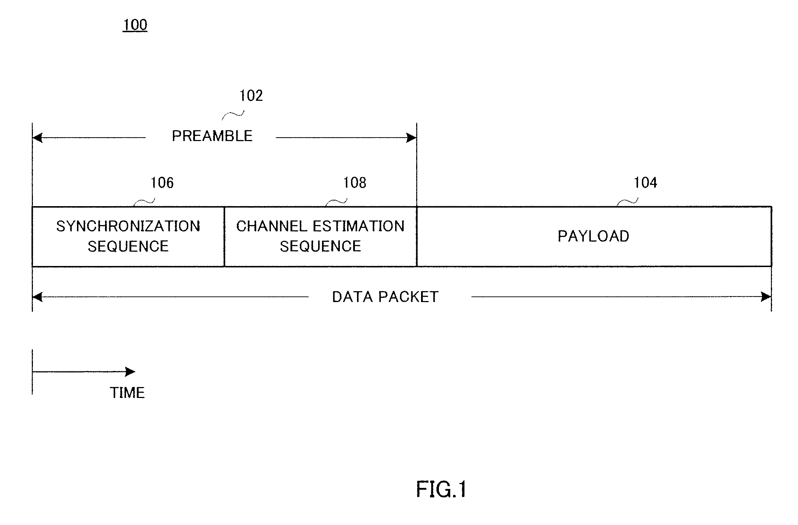

FIG.1 shows an overview of a data packet in a wireless communication system. In FIG.1, preamble 102 is transmitted in the head of data packet 100, and, following this, payload 104 is transmitted next.

Preamble 102 is formed with synchronization sequence 106 and channel estimation sequence 108. Synchronization sequence 106 is comprised of, for example, some repetitions of a specific code, followed by a start frame delimiter (SFD). Here, synchronization sequence 106 is designed for the purpose of synchronizing signals of data packet 100 in a receiver.

After synchronization is established, channel estimation sequence 108 is transmitted so that the receiver can estimate the impulse response function in multipath transmission channels. The channel impulse response function consists of the amplitudes, delay times and phases of a plurality of resolvable paths in the transmission channel. To perform data equalization processing of payload 104, the receiver needs to recognize this channel impulse response function.

In many schemes, channel estimation sequence 108 is designed for phase modulation such as binary phase-shift keying ("BPSK") modulation. For example, in the standard document of IEEE 802.15 TG3c about millimeter waves, Golay complementary sequences by BPSK modulation are adopted for channel estimation. Further, in the standard draft of ECMA TC32-TG20 about millimeter waves, Frank-Zadoff channel estimation sequences by PSK modulation are used.

Also, for example, according to Patent Document 1, a channel estimation sequence is formed with two Golay complementary sequences s(n) and g(n) in the case of BPSK modulation.

On the other hand, with UWB (Ultra Wide Band) which is popular at present for transmitting pulse-shape signals in a wide frequency band, the OOK scheme to transmit data depending on whether or not there is a pulse is suitable, given the UWB characteristics of transmitting pulse-shape signals.

Patent Document 1: U.S. Patent Number 7046748, specification, "Channel estimation sequence and method of estimating a transmission channel which uses such a channel estimation sequence"

Disclosure of Invention

Problems to be Solved by the Invention

By the way, in a wireless communication system, many synchronization sequences and channel estimation sequences are designed for phase modulation.

However, channel estimation sequences designed for phase modulation are not applicable to transmission by OOK modulation (where a signal is transmitted in response to bit "1" and no signals are transmitted in response to bit "0"). That is, signals are not subjected to phase modulation in an OOK transmitter, and, consequently, if two complementary sequences s(n) and g(n) are transmitted by the OOK modulator as shown in Patent Document 1, phase information is lost. Therefore, the channel estimation performance in a receiver degrades significantly.

That is, if sequences designed for phase modulation are transmitted without any modification, the channel estimation performance in the receiver degrades significantly.

Therefore, there is a demand to design a channel estimation sequence that can be transmitted by an OOK modulator. Further, with the designed OOK channel estimation sequence, there is a demand to achieve the same performance as an existing BPSK channel estimation sequence.

It is therefore an object of the present invention to provide a radio communication method, radio transmitting apparatus and radio receiving apparatus for realizing comparable performance to the performance of reception processing in a second modulation scheme, by adopting a sequence that is used in reception processing in the first modulation scheme, where the sequence can be generated from a sequence that is prepared for reception processing and that is used in the second modulation scheme.

Means for Solving the Problem

The radio communication method of the present invention for transmitting a first sequence by a first modulation scheme between a radio transmitting apparatus and a radio receiving apparatus, for signal processing in a communication system, includes: in the radio transmitting apparatus, transmitting subsequence $a_1(n)$ and subsequence $a_2(n)$ as the first sequence, subsequence $a_1(n)$ being the same as second sequence $a(n)$ designed for a second modulation scheme, and subsequence $a_2(n)$ comprising inverted bits as compared with second sequence $a(n)$; and in the radio receiving apparatus, detecting subsequence $a_1(n)$ and subsequence $a_2(n)$ from a received signal and passing a detection result to subsequent processing for the signal processing.

The radio transmitting apparatus of the present invention that transmits a first sequence by a first modulation scheme, employs a configuration having: a modulating section that receives as input subsequence $a_1(n)$ and subsequence $a_2(n)$ as the first sequence, subsequence $a_1(n)$ being the same as second sequence $a(n)$ designed for a second modulation scheme, and subsequence $a_2(n)$ comprising inverted bits as compared with second sequence $a(n)$, and that modulates the first sequence by the first modulation scheme; and a radio transmitting section that up-converts and radio-transmits the modulated first sequence.

The radio receiving apparatus of the present invention that receives a first sequence transmitted by a first modulation scheme, performs a channel estimation based on a received signal and demodulates the received signal based on a result of the channel estimation, employs a configuration having: a radio receiving section that receives a signal including subsequence $a_1(n)$ and subsequence $a_2(n)$, subsequence $a_1(n)$ being the same as second sequence $a(n)$ designed for a second modulation scheme, and subsequence $a_2(n)$ comprising inverted bits as compared with second sequence $a(n)$; and a channel estimating section that comprises: a correlation calculating section that finds correlations between the received signal received in the radio receiving section and sequence $q(n)$ adopting second sequence $a(n)$ as a base unit; and a calculating section that calculates a difference between a correlation result related to subsequence $a_1(n)$ and a correlation result related to subsequence $a_2(n)$, among the correlation results acquired in the correlation calculating section.

Advantageous Effect of the Invention

According to the present invention, it is possible to provide a radio communication method, radio transmitting apparatus and radio receiving apparatus for realizing comparable performance to the performance of reception processing in a second modulation scheme, by adopting a sequence that is used in reception processing in the first modulation scheme, where the sequence can be generated from a sequence that is prepared for reception processing and that is used in the second modulation scheme.

Brief Description of Drawings

FIG.1 shows an overview of a data packet in a wireless communication system;
FIG.2 is a block diagram showing the configuration of a wireless communication system according to Embodiment 1 of the present invention;
FIG.3 is a block diagram showing a configuration example of a forming section;
FIG.4 is a block diagram showing a configuration example of a channel estimating section in a radio receiving apparatus according to Embodiment 1 of the present invention;
FIG.5 is a flowchart illustrating the operations of a wireless communication system;
FIG.6 illustrates a packet format for transmitting a channel estimation sequence;
FIG.7 shows a propagation path model;
FIG.8 is a block diagram showing the configuration of a radio receiving apparatus according to Embodiment 2;
FIG.9 is a block diagram showing the configuration of a channel estimating section shown in FIG.8;
FIG.10 shows a received signal in an environment without reflected waves;
FIG.11 shows a detection signal in an environment without reflected waves;
FIG.12 illustrates a method of binarizing an OOK modulation signal in a binarizing section shown in FIG.8;
FIG.13 illustrates another method of binarizing an OOK modulation signal shown in the binarizing section shown in FIG.8;
FIG.14 illustrates another method of binarizing an OOK modulation signal shown in the binarizing section shown in FIG.8;
FIG. 15 illustrates another method of binarizing an OOK modulation signal shown in the binarizing section shown in FIG.8;

FIG. 16 illustrates another method of binarizing an OOK modulation signal shown in the binarizing section shown in FIG.8;

FIG.17 illustrates another method of binarizing an OOK modulation signal shown in the binarizing section shown in FIG.8;

FIG.18 illustrates another method of binarizing an OOK modulation signal shown in the binarizing section shown in FIG.8;

FIG.19 illustrates another method of binarizing an OOK modulation signal shown in the binarizing section shown in FIG.8;

FIG.20 is a block diagram showing the configuration of a radio receiving apparatus according to Embodiment 3;

FIG.21 shows a frame configuration of transmission data according to Embodiment 4;

FIG.22 shows an example of a correlation value acquired in a correlation value calculating section;

FIG.23 is a block diagram showing the configuration of a channel estimating section shown in FIG.20;

FIG.24 illustrates the operations of a CES extracting section shown in FIG.23;

FIG.25 is a block diagram showing the configuration of a radio receiving apparatus according to another embodiment; and

FIG.26 is a block diagram showing the configuration of a radio receiving apparatus according to another embodiment.

Best Mode for Carrying Out the Invention

In the following paragraphs, as examples, embodiments of the present invention will be explained in detail with reference to the accompanying drawings. Although the present invention can be embodied with many various forms, specific embodiments are illustrated in the drawings and will be explained in detail with this specification. Here, assume that this disclosure is an example of the principle of the present invention, and those specific embodiments, which will be illustrated and explained, are not intended to limit the present invention. That is, assume that the embodiments and examples, which will be described through the following explanation, are not intended to limit the present invention, but should be constructed to provide model examples. Also, in those embodiments, the same components will be assigned the same reference numerals and their explanation will be omitted.

(Embodiment 1)

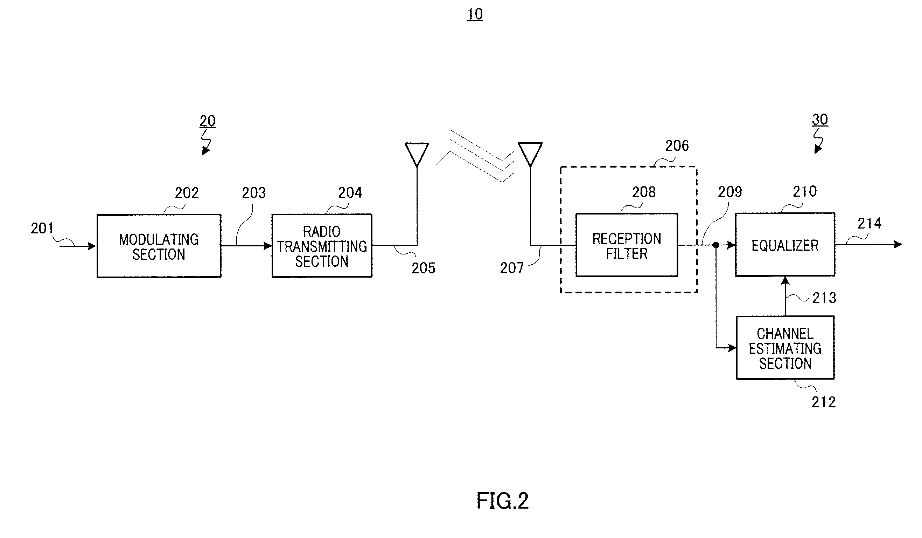

FIG.2 is a block diagram showing the configuration of a wireless communication system according to an embodiment of the present invention. As shown in FIG.2, wireless communication system 10 has radio transmitting apparatus 20 and radio receiving apparatus 30. Radio transmitting apparatus 20 transmits a channel estimation sequence to radio receiving apparatus 30. Radio transmitting apparatus 20 is provided with modulating section 202 and radio transmitting section 204. Radio receiving apparatus 30 is provided with equalizer 210, channel estimating section 212 and radio receiving section 206 having reception filter 208.

Inputted sequence 201 (such as a channel estimation sequence) represented by binary bits of "1's" and "0's" is received as input in modulating section 202.

Modulating section 202 may be a BPSK modulator, OOK modulator or other modulators. For example, when modulating section 202 functions as a BPSK modulator, modulating section 202 sets the positive amplitude "+A" for bit "1" and sets the negative amplitude "-A" for bit "0." Also, when modulating section 202 functions as an OOK modulator, modulating section 202 sets the positive amplitude "+A" for bit "1" and sets zero for bit "0." Modulation signal 203, which is an output signal of modulating section 202 and is modulated by modulating section 202, is transmitted as signal s(n) 205 via radio transmitting section 204.

Signal s(n) 205 is transmitted through multipath channels in which the impulse response function is h(n). General channel impulse response function h(n) can be represented by following equation 1.

[1]

$$h(n) = \sum_{k=1}^{L} a_k \delta(n - r_k) e^{j\phi_k} \ .. \quad (\text{Equation 1})$$

In this equation 1, L represents the total number of paths that can be separated in the multipath channels, and amplitude attenuation $a_k$, time delay $r_k$ and phase shift $\varphi_k$ occur in the k-th path. Also, $\delta(n)$ represents the Dirac delta function. Therefore, $\delta(n-r_k)$ represents delay function $\delta(n)$ in time delay $r_k$.

Signal s(n) 205 transmitted from radio transmitting apparatus 20 is received in radio receiving apparatus 30.

Here, assume that the signal received in radio receiving apparatus 30 is r(n) 207.

Received signal r(n) 207 can be represented by following equation 2.

$$[2]$$

$$r(n) = s(n) \otimes h(n) + w(n)$$
$$= \sum_{k=1}^{L} a_k s(n - r_k) e^{j\varphi_k} + w(n) \quad \ldots (\text{Equation } 2)$$

In this equation, w(n) represents thermal noise that is present in the wireless communication system, or represents while Gaussian noise matching other wideband noise. That is, received signal r(n) is calculated by adding noise w(n) to the convolution product of transmission signal s(n) and channel impulse response function h(n). Here, the convolution product is generally defined by following equation 3.

$$[3]$$

$$z(n) = x(n) \otimes y(n) = \sum_{m=-\infty}^{+\infty} x(m) \cdot y(n - m) \ldots (\text{Equation } 3)$$

Only a necessary band of received signal r(n) 207 is extracted in reception filter 208, and the extracted signal is outputted to equalizer 210 and channel estimating section 212 as filter output 209.

Here, to handle distortion due to the multipath channels and attain accurate detection in equalizer 210, channel impulse response h(n) needs to be calculated or estimated. That is, it is necessary to estimate all of coefficients $a_k$, $r_k$ and $\varphi_k$ for a peak that occurs in the delay profile.

This estimation processing needs to be repeated frequently according to speed changes of channel impulse response h(n). With a method normally employed in the wireless communication system, channel estimation sequence 108 shown in FIG.1 is transmitted per data packet 100 for channel estimation calculation.

Also, phase shift $\varphi_k$ needs to be estimated according to the modulation scheme and detection scheme applied to the communication system. For example, in BPSK modulation using synchronization detection, it is requested to estimate phase shift $\varphi_k$ as 0 degrees or 180 degrees.

Radio transmitting apparatus 20 of the present embodiment has forming section 400, which will be described later, in the input stage of modulating section 202. In forming section 400, channel estimation sequence 108 for OOK modulation is derived from an arbitrary existing sequence designed for BPSK modulation. Here, the existing sequence of length N for BPSK modulation is expressed as "a(n)" (n=0, 1, ..., N-1). Further, for example, sequence a(n) may be the channel estimation sequence formed with Golay complementary sequences disclosed in Patent Document 1, or the Frank-Zadoff channel estimation sequence in the standard of ECMA TC32-TG20 about millimeter waves.

Forming section 400 generates two subsequences $a_1(n)$ and $a_2(n)$ to be transmitted by OOK modulation, by modifying the channel estimation sequence a(n). Here, $a_1(n)$ and $a_2(n)$ both have the same length N as a(n).

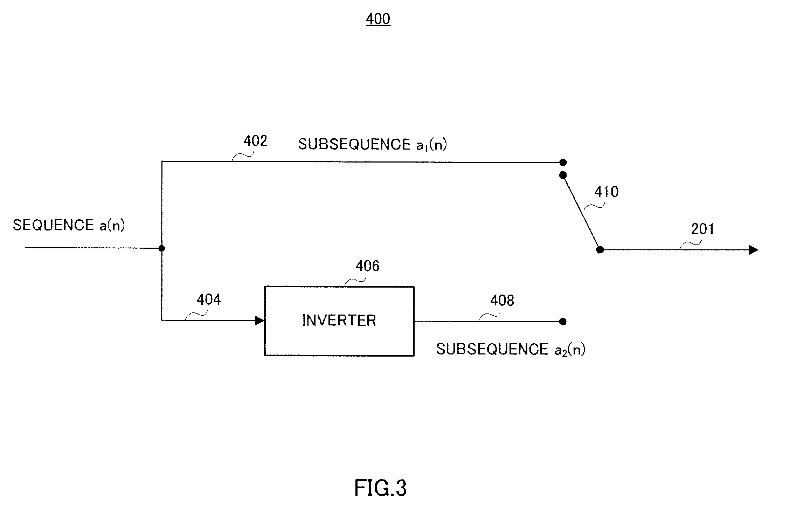

FIG.3 3 is a block diagram showing a configuration example of forming section 400. Forming section 400 is provided with a distributor (shown as a branch point in this figure) that distributes an input signal to two paths, inverter 406 and switch 410. Switch 410 adjusts the output timing of signals that pass the two paths, by switching connection with the output side between these two paths.

Radio receiving apparatus 30 receives subsequences modulated by OOK modulation, from above radio transmitting apparatus 20, and performs channel estimation. To achieve the same channel estimation performance as sequence a(n) in a BPSK receiver, radio receiving apparatus 30 combines the detection results of two subsequences $a_1(n)$ and $a_2(n)$.

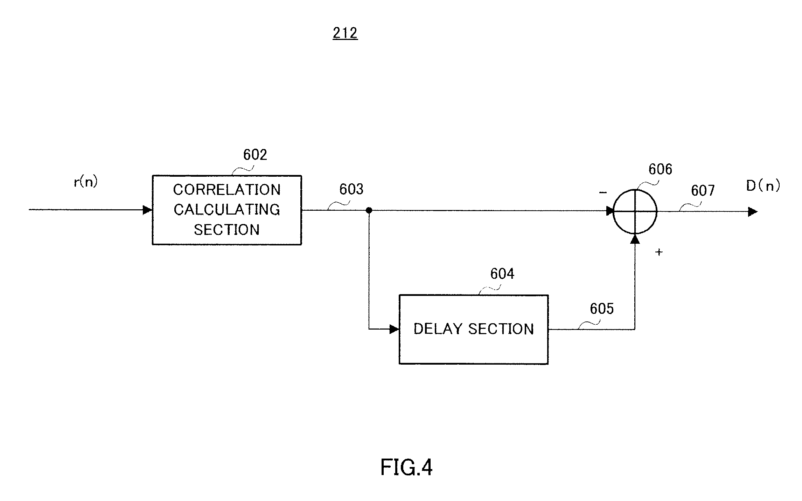

FIG.4 is a block diagram showing a configuration example of channel estimating section 212 of radio receiving apparatus 30. Channel estimating section 212 is provided with correlation calculating section 602, distributor (shown as a branch point in this figure) that distributes the output of correlation calculating section 602 to two branches, delay section 604 and adder 606. Channel estimating section 212 calculates correlations of subsequences $a_1(n)$ and $a_2(n)$, respectively, and adds the calculated correlation results.

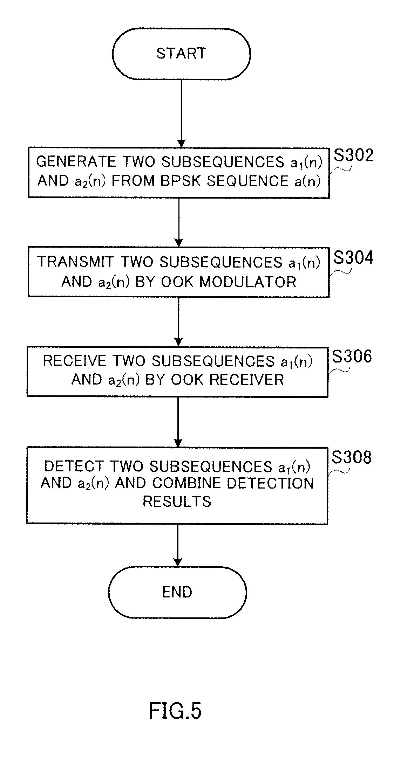

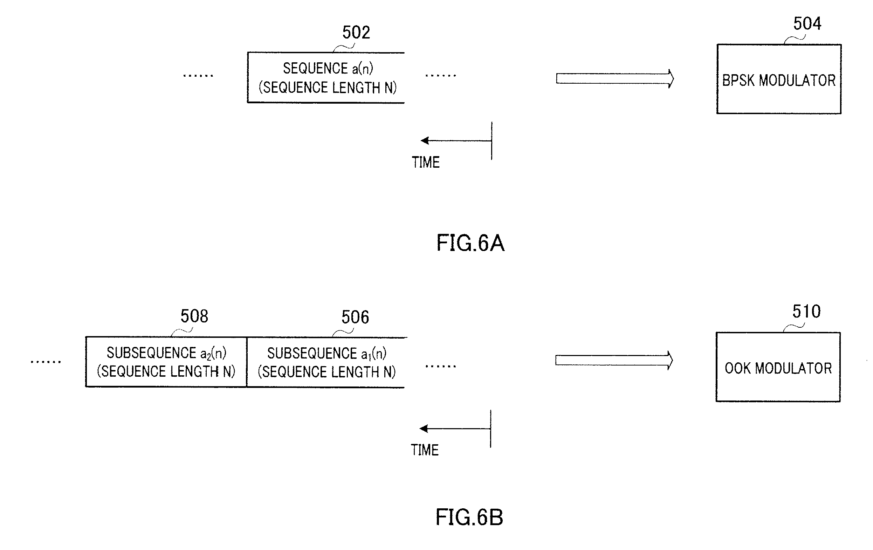

The operations of radio transmitting apparatus 20 and radio receiving apparatus 30 in wireless communication system 10 having the above configurations, will be explained. FIG.5 is a flowchart illustrating these operations. FIG.6 shows a packet format for transmitting channel estimation sequence a(n) in the case of BPSK modulation (in FIG.6A), and shows a packet format for transmitting two channel estimation subsequences $a_1(n)$ and $a_2(n)$ in the case of OOK modulation (in FIG.6B).

In step S302, radio transmitting apparatus 20 generates two subsequences $a_1(n)$ and $a_2(n)$ from sequence a (n). To be more specific, sequence a(n) repressed by N binary bits of "1's" and "0's" is distributed to two branches. In first branch 402, no processing is applied to sequence a(n), and sequence a(n) is given to switch 410 as is.

In second branch 404, sequence a(n) is given to inverter 406, and the bits are inverted in inverter 406. That is, in inverter 406, bits "1's" are inverted to bits "0's," and bits "0's" are inverted to bits "1's." Output 408 of inverter 406, which is subsequence $a_2(n)$ acquired by bit inversion processing, is outputted to switch 410.

Switch 410 outputs the outputs 402 and 408 to modulating section 202 at different times. As a result, the outputs 402 and 408 are sequentially connected and received as inputted sequence 201 in modulating section 202,

In FIG.3, the outputs 402 and 408 are represented by subsequences $a_1(n)$ and $a_2(n)$, respectively.

Also, the processing of forming section 400 in FIG.3 can be expressed as following equations 4 and 5. Here, equation 4 represents the processing in the first branch, and equation 5 represents the processing in the second branch.

$$[4]$$

$$a_1(n) = a(n) \dots (\text{Equation } 4)$$

$$[5]$$

$$a_2(n) = Inv\left[a(n)\right] = 1 - a(n) \dots (\text{Equation } 5)$$

In this equation, Inv[] represents the inversion function. For example, if sequence a(n) is [0111], two subsequences $a_1(n)$ and $a_2(n)$ can be calculated as [0111] and [1000], respectively.

In step S304, radio transmitting apparatus 20 transmits two subsequences $a_1(n)$ and $a_2(n)$ by the OOK modulator (i.e. modulating section 202). As shown in FIG.6B, subsequence $a_1(n)$ 506 is transmitted before subsequence $a_2(n)$ 508. The OOK modulator (i.e. modulating section 202) sets the positive amplitude "+A" for bits "1's" and zero for bits "0's."

Here, for comparison, modulation of a conventional channel estimation sequence will be shown in FIG.6A. In FIG.6A, sequence a(n) 502 is transmitted to BPSK modulator 504, and BPSK modulator 504 sets the positive amplitude "+A" for bits "1's" and the negative amplitude "-A" for bits "0's."

In view of the above, the length of a channel estimation sequence for OOK modulation in the present embodiment is twice as long as the length in the case of BPSK modulation.

In step S306, the OOK receiver (i.e. radio receiving apparatus 30) receives two subsequences $a_1(n)$ and $a_2(n)$. Basically, only the amplitude of the received signals can be detected in the OOK receiver. By contrast, a BPSK receiver can detect not only the amplitude of a received signal but also the polarity ("+" or "-") of the received signal.

In step S308, channel estimating section 212 calculates the correlations of two subsequences $a_1(n)$ and $a_2(n)$, and adds the calculated correlation results.

To be more specific, received signal r(n) subjected to filtering processing in reception filter 208 is received as input in correlation calculating section 602, and correlation calculating section 602 finds the correlation between received signal r(n) and local sequence q(n).

Here, in a BPSK correlator, a(n) is normally subjected to OOK modulation, and, consequently, "q(n)=2*a(n)-1" is adopted as a local sequence for setting "-1" as the amplitude value of bit "0." This is because the BPSK receiver can detect the amplitude and polarity of the received signal. The local sequence is used to detect subsequences included in the received signal, and is therefore the sequence detection reference signal. Further, the local sequence adopts the source sequence of the subsequences as a base unit, and is therefore a replica signal of that sequence.

Even in the OOK correlator of the present embodiment (i.e. correlation calculating section 602), the same sequence q(n)=2*a(n)-1 is adopted for the purpose of achieving the same channel estimation performance as the BPSK correlator.

There are the two following branches in the output stage of correlation calculating section 602.

First, in the first branch, output 603 is directly transmitted to adder 606. Next, in the second branch, output 603 is delayed by a time length of N bits in delay section 604 and then transmitted to adder 606.

Adder 606 calculates difference D(n) 607 between delayed correlation output 605 and correlation output 603 without delay, and outputs the difference to the subsequent stage for channel estimation.

Theoretically, D(n) in a channel without noise can be represented by following equation 6.

[6]

$$D(n) = \Phi[r_1(n), q(n)] - \Phi[r_2(n), q(n)]$$
$$= \Phi[a_1(n), q(n)] - \Phi[a_2(n), q(n)]$$
$$= \Phi[a_1(n) - a_2(n), q(n)] = \Phi[q(n), q(n)] \quad \ldots(\text{Equation 6})$$

In this equation, $\Phi[x(n), y(n)]$ represents the correlation between two sequences $x(n)$ and $y(n)$. Here, assume that, when a BPSK transmitter transmits sequence $a(n)$, a BPSK receiver receives sequence $q(n)=2*a(n)-1$. Therefore, the correlation output of the BPSK correlator is equivalent to $\Phi[q(n), q(n)]$.

Next, referring to multipath channels in which the impulse response function is $h(n)$, $D(n)$ can be represented by following equation 7.

[7]

$$D(n) = \Phi[r_1(n), q(n)] - \Phi[r_2(n), q(n)]$$
$$= \Phi\left[\sum_{k=1}^{L} a_k a_1(n - r_k)e^{j\phi_k} + w_1(n), q(n)\right] - \Phi\left[\sum_{k=1}^{L} a_k a_2(n - r_k)e^{j\phi_k} + w_2(n), q(n)\right]$$
$$= \sum_{k=1}^{L} a_k \cdot \Phi[a_1(n - r_k) - a_2(n - r_k), q(n)] \cdot e^{j\phi_k} + \Phi[w_1(n), q(n)] - \Phi[w_2(n), q(n)]$$
$$= \Phi\left[\sum_{k=1}^{L} a_k q(n - r_k)e^{j\phi_k}, q(n)\right] + \Phi[w_1(n), q(n)] - \Phi[w_2(n), q(n)] \ldots(\text{Equation 7})$$

Here, signals $r_1(n)$ and $r_2(n)$ represent subsequences $a_1(n)$ and $a_2(n)$ that are received in radio receiving apparatus 30 after passing the multipath channels. Also, assume that impulse response function $h(n)$ does not change while $r_1(n)$ and $r_2(n)$ are received.

In the BPSK correlator, it is possible to acquire the same correlation output represented by equation 8 except for the random noise terms.

[8]

$$\Phi\left[\sum_{k=1}^{L} a_k q(n - r_k)e^{j\phi_k}, q(n)\right] \ldots(\text{Equation 8})$$

As described above, instead of the random noise terms, channel estimating section 212 calculates or estimates coefficients $a_k$, $r_k$ and $\varphi_k$ of channel impulse response function $h(n)$. Accordingly, as a conclusion, the channel estimation performance by OOK modulation according to the present embodiment is the same as the channel estimation performance by BPSK modulation.

A case has been described with the above explanation where only one BPSK channel estimation sequence a (n) is used. However, the present invention is not limited to this, and one of ordinary skill in the art would understand that the number of BPSK channel estimation sequences can be two or more in the present invention.

That is, in another embodiment, it is possible to adopt Golay complementary sequences $a(n)$ and $b(n)$ by BPSK modulation, for channel estimation. In this case, it is possible to derive two OOK subsequences $a_1(n)$ and $a_2(n)$ from BPSK sequence $a(n)$ and further derive two other OOK subsequences $b_1(n)$ and $b_2(n)$ from BPSK sequence b (n). By transmitting four subsequences $a_1(n)$, $a_2(n)$, $b_1(n)$ and $b_2(n)$ by an OOK modulator, an OOK receiver can provide the same channel estimation performance as a BPSK receiver.

To be more specific, in FIG.3, following sequence $a(n)$, sequence $b(n)$ (e.g. a sequence corresponding to Golay complementary sequence $g(n)$ explained in the background art) is received as input in forming section 400 and distributed to two branches in the same way as sequence $a(n)$.

Next, subsequence $b_2(n)$ is acquired by applying bit inversion to sequence $b(n)$ distributed to the second branch. Also, the other sequence $b(n)$ distributed to the first branch is not subjected to any processing and is outputted as

subsequence $b_1(n)$.

That is, in FIG.6B, following subsequence $a_2(n)$, subsequences $b_1(n)$ and $b_2(n)$ are continuously outputted from forming section 400 and received as input in the OOK modulator (i.e. modulating section 202) in that order. Subsequences $a_1(n)$, $a_2(n)$, $b_1(n)$ and $b_2(n)$ are subjected to OOK modulation in the OOK modulator (i.e. modulating section 202), and the resulting modulation signals are transmitted by radio in radio transmitting section 204.

Next, in the receiver, correlation calculating section 602 calculates the correlations between $q(n)$ (i.e. sequence $2*a(n)-1$ for $a_1(n)$ and $a_2(n)$, and sequence $2*b(n)-1$ for $b_1(n)$ and $b_2(n)$) and received OOK subsequences $a_1(n)$, $a_2(n)$, $b_1(n)$ and $b_2(n)$. Further, adder 606 subtracts the correlation result of subsequence $a_2(n)$ from the correlation result of subsequence $a_1(n)$ and subtracts the correlation result of subsequence $b_2(n)$ from the correlation result of subsequence $b_1(n)$. In this case, as described above, the result of subtracting the correlation result of subsequence $a_2(n)$ from the correlation result of subsequence $a_1(n)$ theoretically matches the correlation result acquired by conventional BPSK channel estimation, that is, the subtraction result theoretically matches the correlation result between BPSK channel estimation sequence $a(n)$, which is transmitted as is from a transmitter and received in a receiver, and $q(n)$ (which is a sequence corresponding to BPSK channel estimation sequence $a(n)$).

Similarly, the result of subtracting the correlation result of subsequence $b_2(n)$ from the correlation result of subsequence $b_1(n)$ theoretically matches the correlation result acquired by conventional BPSK channel estimation, that is, the subtraction result theoretically matches the correlation result between BPSK channel estimation sequence $b(n)$, which is transmitted as is from the transmitter and received in the receiver, and $q(n)$ (which is a sequence corresponding to BPSK channel estimation sequence $b(n)$).

Further, the subtraction result related to subsequences $a_1(n)$ and $a_2(n)$ and the subtraction result related to subsequences $b_1(n)$ and $b_2(n)$ are added. Here, there is a difference of 2N between the timing the subtraction result related to subsequences $a_1(n)$ and $a_2(n)$ is acquired and the timing the subtraction result related to subsequences $b_1(n)$ and $b_2(n)$ is acquired. Accordingly, it is necessary to synchronize these timings before the addition processing.

Therefore, for example, it is necessary to provide a distributor that distributes an input signal to two branches, a delayer (providing a delay amount of 2N) to be set in one branch and an adder that adds the signals after the two branches, after the configuration of FIG.4 (i.e. in the output stage of the configuration of FIG.4).

Alternatively, it is equally possible to provide the distributor that distributes an input signal to two branches, before the configuration of FIG.4 (i.e. in the input stage of the configuration of FIG.4), and provide the configuration of FIG.4 in each of the two branches. In this case, in one branch, correlation calculating section 602 calculates the correlations between $a_1(n)$, $a_2(n)$ and $q(n)$ (which is sequence $2*a(n)-1$), and, in the other branch, correlation calculating section 602 calculates the correlations between $b_1(n)$, $b_2(n)$ and $q(n)$ (which is sequence $2*b(n)-1$). Here, the delayer (providing a delay amount of 2N) needs to be set in one branch. Further, an adder that adds the signals having passed those branches is provided.

Also, in the above explanation, a method of deriving OOK subsequences from a BPSK channel estimation sequence has been described.

However, the present invention is not limited to this, and one of ordinary skill in the art would understand that the present invention is not limited to BPSK channel estimation sequences. In another embodiment, by adopting the method of the present invention, it is possible to derive two OOK subsequences $e_1(n)$ and $e_2(n)$ from BPSK synchronization sequence $e(n)$.

Also, in the above explanation, a method of deriving an OOK channel estimation sequence from a BPSK channel estimation sequence and deriving an OOK synchronization sequence from a BPSK synchronization sequence, has been described. However, the present invention is not limited to this, that is, the present invention is not limited to OOK modulation and BPSK modulation. One ordinary skill in the art would understand that a channel estimation sequence and synchronization sequence for ASK modulation can be derived according to the present invention. Further, a sequence for BPSK modulation can be replaced with a sequence for differential BPSK modulation.

Also, an estimation sequence and synchronization sequence for BPSK modulation used in the present embodiment can be acquired by modifying an estimation sequence and synchronization sequence for another modulation scheme. In one embodiment, Franck-Zadoff channel estimation sequence $a_{BPSK}(n)$ for BPSK modulation is acquired from Franck-Zadoff channel estimation sequence $a_{16\text{-}PSK}(n)$ for 16-PSK modulation (which is a sequence of complex numbers). This derivation can be expressed by following equation 9.

[9]

$$a_{BPSK}(n) = \begin{cases} 1 & if \, \mathrm{Re}[a_{16\text{-}PSK}(n)] > \mathrm{Im}[a_{16\text{-}PSK}(n)] \, or \, \mathrm{Re}[a_{16\text{-}PSK}(n)] = \mathrm{Im}[a_{16\text{-}PSK}(n)] > 0 \\ -1 & if \, \mathrm{Re}[a_{16\text{-}PSK}(n)] < \mathrm{Im}[a_{16\text{-}PSK}(n)] \, or \, \mathrm{Re}[a_{16\text{-}PSK}(n)] = \mathrm{Im}[a_{16\text{-}PSK}(n)] < 0 \end{cases} \quad \ldots (\mathrm{Equation} \; 9)$$

In this equation, Re[x(n)] and Im[x(n)] represent the real part and the imaginary part of complex number x(n), respectively.

That is, the first bit value is set in sequence a(n) if the real part of sequence c(n) is greater than the imaginary part of sequence c(n) or the real part and imaginary part of sequence c(n) are both equal to or greater than 0, and the second bit value is set in sequence a(n) if the real part of sequence c(n) is less than the imaginary part of sequence c (n) or the real part and imaginary part of sequence c(n) are both equal to or less than 0. Here, the first bit value is the positive bit value "+1" and the second bit value is the negative bit value "-1."

(Embodiment 2)

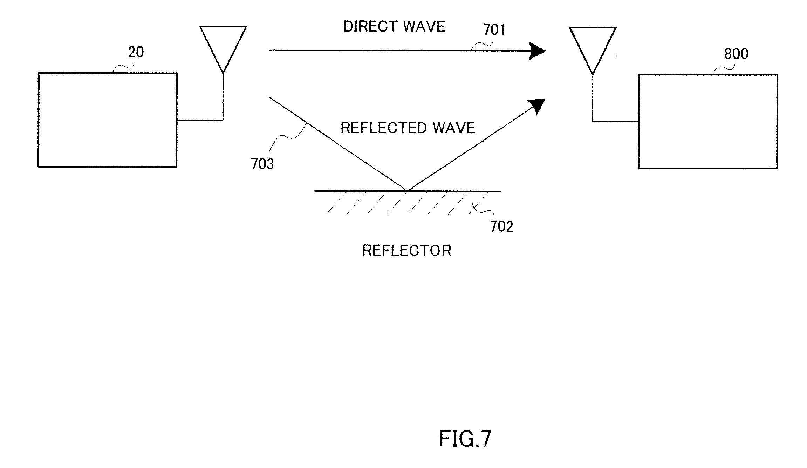

A case has been described above with Embodiment 1 where a radio transmitting apparatus and radio receiving apparatus transmit and receive an optimal channel estimation sequence for OOK modulation signals. By contrast with this, with Embodiment 2, a radio receiving apparatus and its correcting method for correcting the amplitude of received signals based on a channel estimation result, will be explained. Here, transmission signals are modulated by OOK in the present embodiment. Also, as shown in FIG.7, the propagation path between radio transmitting apparatus 20 and radio receiving apparatus 800 is modeled by a two-wave model formed with two waves of direct wave 701 and reflected wave 703 from reflector 702 such as the ground, desk and wall.

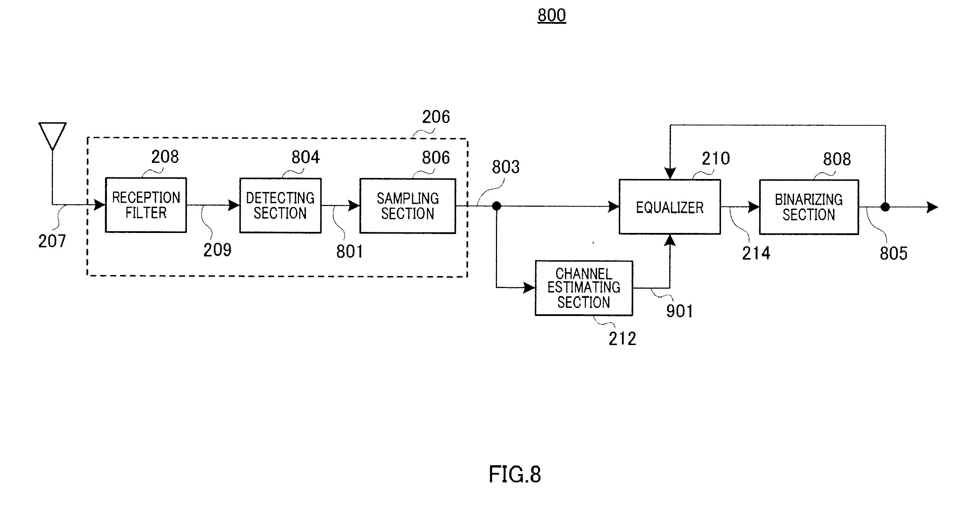

FIG.8 is a block diagram showing the configuration of radio receiving apparatus 800 according to Embodiment 2 of the present invention. The same components as in radio receiving apparatus 30 shown in FIG.2 will be assigned the same reference numerals and their explanation will be omitted.

Radio receiving apparatus 800 in FIG.8 is provided with an antenna, radio receiving section 206, channel estimating section 212, equalizer 210 and binarizing section 808, where radio receiving section 206 includes reception filter 208, detecting section 804 and sampling section 806.

The antenna receives a signal transmitted from radio transmitting apparatus 20, and outputs received signal 207 to reception filter 208.

Reception filter 208 cancels noise outside the desired band, from the received signal, by limiting the band of the received signal. Further, reception filter 208 outputs received signal 209 without noise to detecting section 804.

Detecting section 804 performs predetermined detection processing of received signal 209 without noise. Here, predetermined detection processing may be, for example, synchronization detection, delay detection and envelope detection. Further, detecting section 804 outputs detection signal 801 acquired by detecting received signal 209 without noise, to sampling section 806. Here, with the present embodiment, detecting section 804 performs synchronization detection.

Sampling section 806 samples detection signal 801 at predetermined sample timings and outputs sample value 803 to channel estimating section 212 and equalizer 210.

Sampling section 806 provides, for example, an ADC (Analog-to-Digital Converter), and samples detection signal 801 at a sampling rate which is M times (where M is a positive number) greater than a symbol rate. An example case will be explained with the present embodiment where M is 1. Therefore, one sample value is acquired per detection signal symbol.

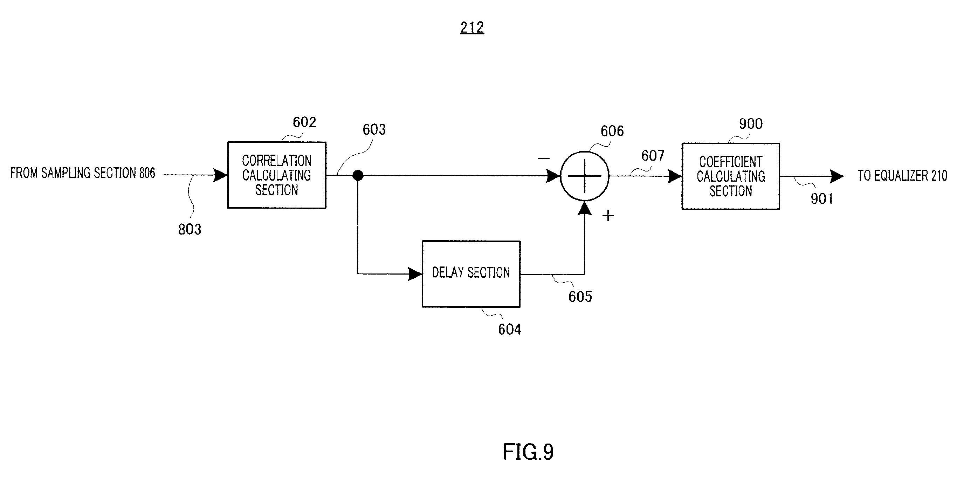

As shown in FIG.9, channel estimating section 212 is provided with correlation calculating section 602, delay section 604, adder 606 and coefficient calculating section 900. Here, correlation calculating section 602, delay section 604 and adder 606 perform the same processing as in Embodiment 1.

Coefficient calculating section 900 calculates coefficients $a_k$, $r_k$ and $\varphi_k$, which are described in Embodiment 1, using addition values 607 outputted from adder 606. Here, k=1, ..., L holds, and "L" represents the number of delay waves that can be detected.

Further, coefficient calculating section 900 outputs calculated coefficients $a_k$, $r_k$ and $\varphi_k$ to equalizer 210 as channel estimation result 901. The propagation path is modeled with a two-wave model in the present embodiment, and therefore L=2 and k=1, 2 hold.

Here, the specific method of calculating coefficients $a_k$, $r_k$ and $\varphi_k$ will be explained.

Coefficient calculating section 900 detects L addition values in descending order of their absolute values, from N (where N represents the length of a channel estimation sequence) addition values 607. Here, k is equal to 1 and 2, and therefore $a_1$ and $a_2$ are detected.

Next, coefficient calculating section 900 detects time $r_k$ at which $a_k$ was detected. For example, if $a_1$ is detected at i-th addition value 607 and $a_2$ is detected at j-th (j>i) addition value 607 among N addition values 607, $r_1$=i and $r_2$=j hold. Generally, a direct wave is received before a delayed wave, and, consequently, if j>i, absolute value $|a_1|$ of $a_1$ represents the amplitude of the direct wave and absolute value $|a_2|$ of $a_2$ represents the amplitude of the delayed wave. Also, a sample frequency at which one sample value is acquired per detection signal symbol (corresponding to one bit because of OOK modulation) is adopted, and therefore it is understood that the delay wave is received with a delay of $r_2$-$r_1$=j-i bits behind the direct wave.

Next, coefficient calculating section 900 detects the phase $\varphi_k$ of the wave corresponding to $a_k$. In actual wireless

communication, $\varphi_k$ assumes arbitrary values between -180 degrees and +180 degrees. However, with the present embodiment, for ease of phase estimation, $\varphi_k$ is detected to show two phases of 0 degree and 180 degrees. To be more specific, while $\varphi_k$ is detected as $\varphi_k=0°$ when $a_k\geq0$, $\varphi_k$ is detected as $\varphi_k=180°$ when $a_k<0$. With the present embodiment, the difference between $\varphi_1$ and $\varphi_2$ represents the phase difference between the direct wave and the delay wave.

As described above, coefficient calculating section 900 calculates coefficients $a_k$, $r_k$ and $\varphi_k$ as channel estimation result 901.

Referring back to FIG.8, equalizer 210 corrects the amplitude of sample value 803 outputted from sampling section 806, using channel estimation result 901 outputted from channel estimating section 212 and demodulation result 805 outputted from binarizing section 808.

Binarizing section 808 binarizes sample value 214 of the amplitude corrected in equalizer 210, by comparing this sample value 214 with predetermined threshold "th," and outputs the binarized result as demodulation result 805. Demodulation result 805 is also outputted to equalizer 210.

The binarization method in binarizing section 808 and the amplitude correcting method in equalizer 210 will be explained below. Here, although detection signal 801 is subjected to predetermined processing in sampling section 806, channel estimating section 212 and equalizer 210, their explanation will be omitted for each of explanation. That is, assume that detection signal 801 is directly received as input in binarizing section 808.

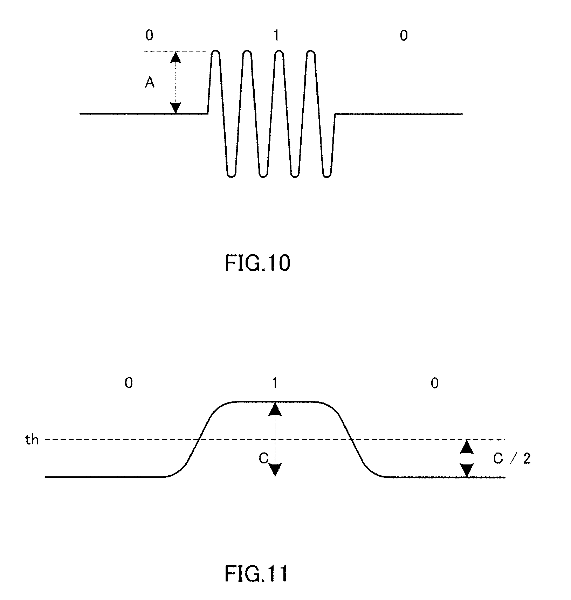

First, the method of binarizing an OOK modulation signal in binarizing section 808 will be explained using FIG. 10 and FIG.11. FIG.11 shows received signal 209 in the case of receiving OOK modulation signal "010" in an environment where there are no reflected waves. In OOK, amplitude A is assigned to bit "1" and amplitude 0 is assigned to bit "0." Therefore, received signal 209 from which noise is cancelled is as shown in FIG.10.

Received signal 209 without noise is subjected to detection processing in detecting section 804. As a result, detection signal 801 is as shown in FIG. 11. As a result of detection processing, the amplitude for bit "1" becomes "C." Here, C is the value determined by apparatus design and represents the amplitude of assumed detection signal in the case of receiving bit "1."

Binarizing section 808 binarizes detection signal 801 by comparing the amplitude of detection signal 801 and predetermined threshold th, and outputs the binarized result as demodulation result 805. As shown in FIG.11, when the amplitude of detection signal 801 for bit "1" is C, the value of threshold th is normally set to C/2.

Further, for example, binarizing section 808 binarizes detection signal 801 to "1" if the amplitude of detection signal 801 is equal to or greater than C/2, or binarizes detection signal 801 to "0" if the amplitude of detection signal 801 is less than C/2. Thus, binarizing section 808 binarizes detection signal 801.

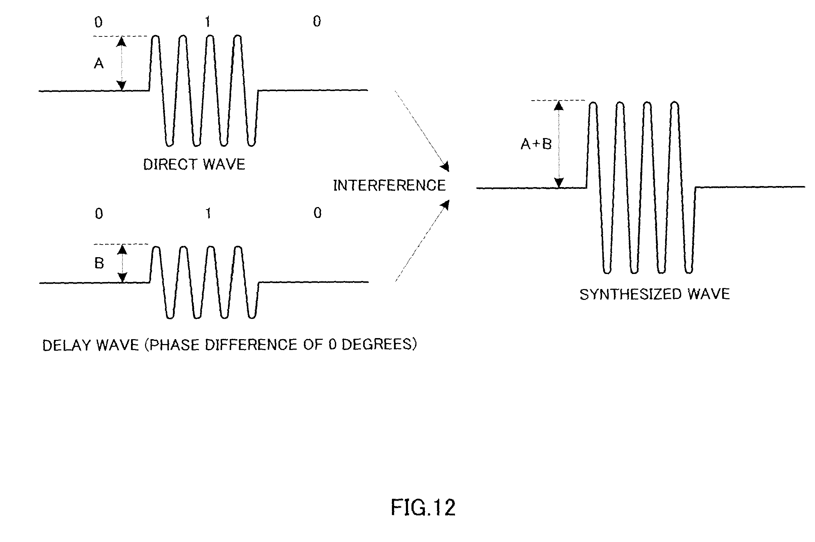

Next, the amplitude correcting method for sample value 803 in equalizer 210 will be explained using FIG.12 to FIG.19. With the present embodiment, propagation paths are presumed with a two-wave model. Also, an example case will be explained where the phase difference between a direct wave and a delay wave is one of 0 degrees and 180 degrees. Also, how, specifically, the interference state of an input waveform is decided, will be described later.

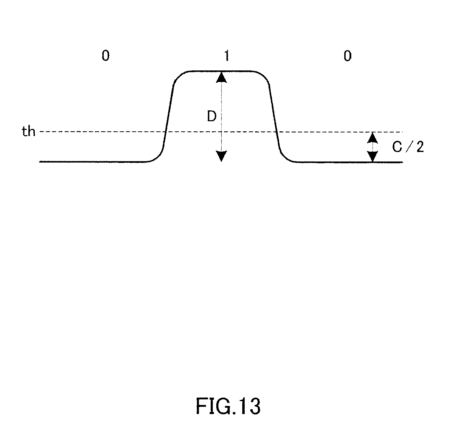

FIG.12 shows a synthesized wave (i.e. received signal) in the case where bit "1" of the delay wave interferes with bit "1" of the direct wave in a state where the phase difference between the direct wave and the delay wave is 0 degrees. As shown in FIG.12, when the amplitude of the direct wave is A and the amplitude of the delay wave is B, the amplitude of the synthesized wave is A+B. If radio receiving apparatus 800 receives the synthesized wave of FIG.12, the amplitude of detection signal 801 is D (D>C) as shown in FIG.13. Therefore, if bit "1" of the delay wave interferes with bit "1" of the direct wave at a phase difference of 0 degrees, bit error due to the delay wave does not occur in a processing result of binarizing section 808

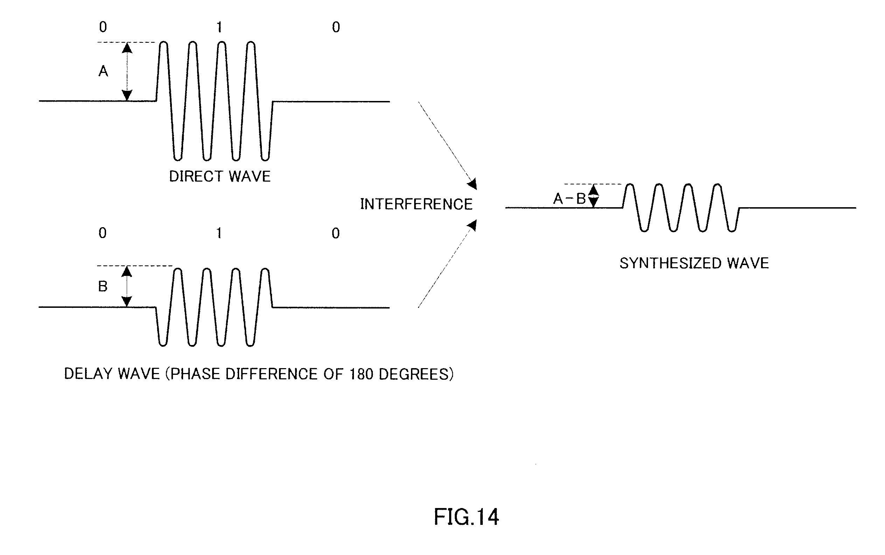

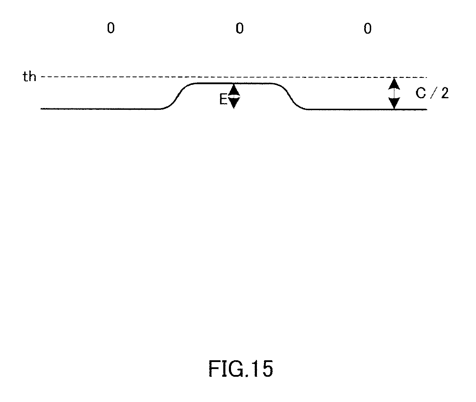

FIG.14 shows a synthesized wave when bit "1" of the delay wave interferes with bit "1" of the direct wave at a phase difference of 180 degrees. As shown in FIG.14, when the amplitude of the direct wave is A and the amplitude of the delay wave is B, the amplitude of the synthesized wave is A-B. If radio receiving apparatus 800 receives the synthesized wave shown in FIG.14, the amplitude of detection signal 801 is E (E<C) as shown in FIG.15. Especially, in the case of B>A/2, E<C/2 holds. That is, although the binarization result corresponding to bit "1" of the direct wave should be acquired, binarizing section 808 detects bit "0." Therefore, when bit "1" of the delay wave interferes with bit "1 " of the direct wave at a phase difference of 180 degrees, bit error due to the delay wave occurs in the processing result of binarizing section 808.

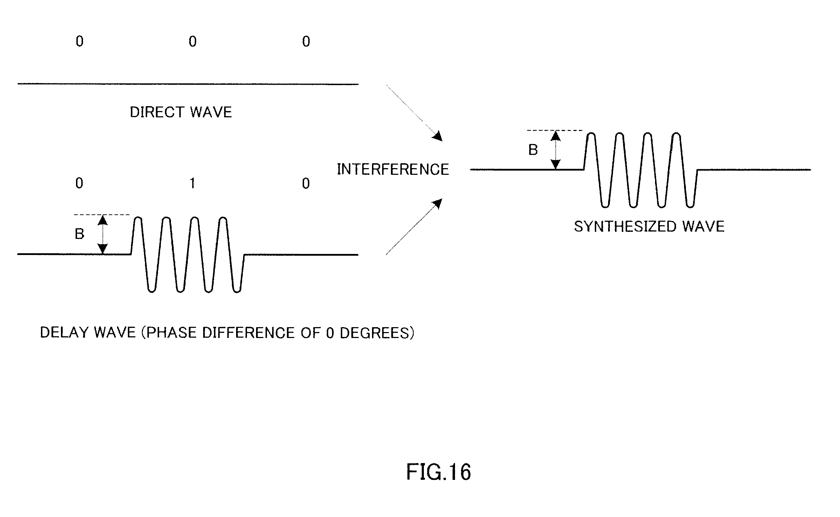

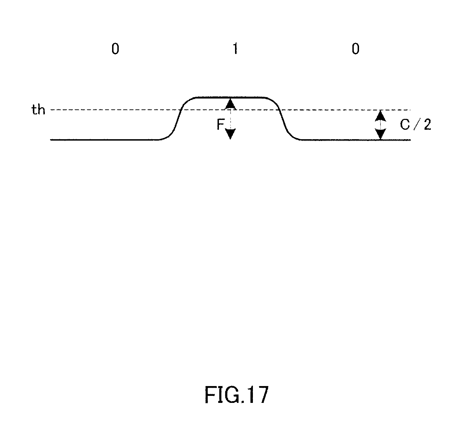

FIG.16 shows a synthesized wave in the case where bit "1" of the delay wave interferes with bit "0" of the direct wave at a phase difference of 0 degrees. As shown in FIG.16, when the amplitude of the direct wave is 0 and the amplitude of the delay wave is B, the amplitude of the synthesized wave is B. If radio receiving apparatus 800 receives the synthesized wave shown in FIG.16, the amplitude of detection signal 801 is F (F>0) as shown in FIG.17. Especially, in the case of B>A/2, F>C/2 holds. That is, although the binarization result corresponding to bit "0" of the direct wave should be acquired, binarizing section 808 detects bit "1." Therefore, when bit "1" of the delay wave interferes with bit "0" of the direct wave at a phase difference of 0 degrees, bit error due to the delay wave occurs in the processing result of binarizing section 808.

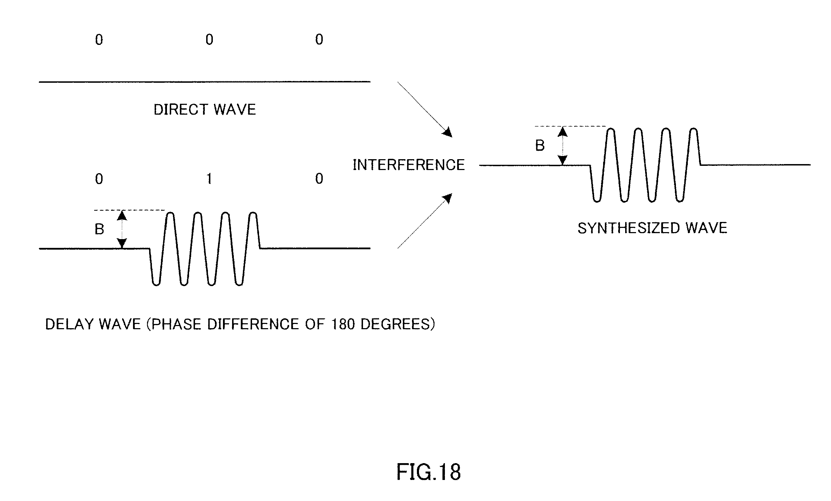

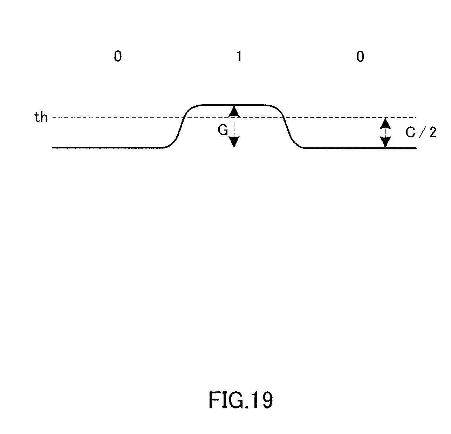

FIG.18 shows a synthesized wave in the case where bit "1" of the delay wave interferes with bit "0" of the direct wave at a phase difference of 180 degrees. As shown in FIG.18, when the amplitude of the direct wave is 0 and the amplitude of the delay wave is B, the amplitude of the synthesized wave is B. If radio receiving apparatus 800 receives the synthesized wave shown in FIG.18, the amplitude of detection signal 801 is G (G=F>0) as shown in FIG.19. Especially, in the case of B>A/2, G>C/2 holds. That is, although the binarization result corresponding to bit "0" of the direct wave should be acquired, binarizing section 808 detects bit "1." Therefore, when bit "1" of the delay wave interferes with bit "0" of the direct wave at a phase difference of 180 degrees, bit error due to the delay wave occurs in the processing result of binarizing section 808.

Here, in the case of bit "0" of the delay wave, the amplitude of the delay wave is 0, and, consequently, even if the delay wave interferes with the direct wave, bit error does not occur.

In view of the above, the amplitude of detection signal 801 need to be corrected as follows, depending on bits of the direct wave, bits of the delay wave and the phase difference between the direct wave and the delay wave. Here, referring to FIG.10 and FIG.11, the detection signal for amplitude C can be acquired as a result of detecting the direct wave of amplitude A, so that, if the amplitude of received signal 209 is linearly transformed by detection processing in detecting section 804, detecting section 804 sets C/A times the amplitude of received signal 209 and outputs the result. Here, assume that the output of equalizer 210 is expressed as "H."

(1) In the case where the direct wave is bit "1," the delay wave is bit "1" and the phase difference between the direct wave and the delay wave is 0 degrees

In this case, the amplitude of received signal 209 is A+B, and therefore amplitude D of detection signal 801 is expressed as D=(A+B)×C/A. According to the channel estimation result, A:B=$|a_1|$:$|a_2|$ holds, and therefore D= (A+A×$|a_2|$/$|a_1|$)×C/A=C×(1+$|a_2|$/$|a_1|$) holds. Therefore, as shown in equation 10, equalizer 210 corrects the amplitude of detection signal 801 from D to C. That is, equalizer 210 converts the amplitude of detection signal 801 to the amplitude in an ideal state where there is no interference by the delay wave.

[10]

$$H = C = \frac{D}{1+|a_2|/|a_1|} = D \times \frac{|a_1|}{|a_1|+|a_2|} \quad \dots (\text{Equation } 10$$

(2) In the case where the direct wave is bit "1," the delay wave is bit "1" and the phase difference between the direct wave and the delay wave is 180 degrees

In this case, the amplitude of the received signal is A-B, and therefore amplitude E of detection signal 801 is expressed as E=(A-A×$|a_2|$/$|a_1|$)×C/A=C×(1-$|a_2|$/$|a_1|$)). Therefore, as shown in equation 11, equalizer 210 corrects the amplitude of detection signal 801 from E to C.

[11]

$$H = C = \frac{E}{1-|a_2|/|a_1|} = E \times \frac{|a_1|}{|a_1|-|a_2|} \dots (\text{Equation } 11)$$

(3) In the case where the direct wave is bit "1," the delay wave is bit "0" and the phase difference between the direct wave and the delay wave is 0 degrees

In this case, the amplitude of the delay wave is 0, and therefore the amplitude of detection signal 801 is C. Therefore, equalizer 210 outputs detection signal 801 as is, without correcting the amplitude of detection signal 801.

(4) In the case where the direct wave is bit "1," the delay wave is bit "0" and the phase difference between the direct wave and the delay wave is 180 degrees

In this case, the amplitude of the delay wave is 0, and therefore the amplitude of detection signal 801 is C. Therefore, equalizer 210 outputs detection signal 801 as is, without correcting the amplitude of detection signal 801.

(5) In the case where the direct wave is bit "0," the delay wave is bit "1" and the phase difference between the direct wave and the delay wave is 0 degrees
In this case, equalizer 210 corrects the amplitude of detection signal 801 from F to 0. That is, the correction processing expressed by equation 12 is performed.

$$[12]$$

$$H = 0 = F - F \dots (\text{Equation } 12)$$

(6) In the case where the direct wave is bit "0," the delay wave is bit "1" and the phase difference between the direct wave and the delay wave is 180 degrees
In this case, equalizer 210 corrects the amplitude of detection signal 801 from G to 0. That is, the correction processing expressed by equation 13 is performed.

$$[13]$$

$$H = 0 = G - G \dots (\text{Equation } 13)$$

(7) In the case where the direct wave is bit "0," the delay wave is bit "0" and the phase difference between the direct wave and the delay wave is 0 degrees
In this case, the amplitude of the delay wave is 0, and therefore the amplitude of detection signal 801 is 0. Therefore, equalizer 210 outputs detection signal 801 as is, without correcting the amplitude of detection signal 801.

(8) In the case where the direct wave is bit "0," the delay wave is bit "0" and the phase difference between the direct wave and the delay wave is 180 degrees
In this case, the amplitude of the delay wave is 0, and therefore the amplitude of detection signal 801 is 0. Therefore, equalizer 210 outputs detection signal 801 as is, without correcting the amplitude of detection signal 801.

As described above, there are eight patterns of states of interference between the direct wave and the delay wave, depending on bits of the direct wave, bits of the delay wave and the phase difference between the direct wave and the delay wave. However, in the case where a bit of the delay wave is "0" (i.e. in the above cases 3, 4 and 5), equalizer 210 does not perform correction processing. That is, it is not necessary to distinguish between cases (3), (4), (7) and (8).
Therefore, actually, equalizer 210 detects five states (1), (2), (5), (6) and (9) (= cases (3), (4), (7) or (8)) and performs correction processing suitable for each state.
Next, the method of identifying between the above five states in equalizer 210 will be explained.
Equalizer 210 identifies between the above five states using channel estimation result 901 and demodulation result 805. Here, as a result of channel estimation, the coefficients representing the direct wave are $a_1 = A_i$, $r_1 = i$ and $\varphi_1 = \varphi_i$, and the coefficients representing the delay wave are $a_2 = A_j$, $r_2 = j$ and $\varphi_2 = \varphi_j$. Also, assume that sample value 803 at time m is $U_m$ and demodulation result 805 of sample value 803 is $V_m$.
By this means, it is possible to identify between states (1), (2), (5), (6) and (9) as follows.
(I) If the demodulation result at the timing j-i before time m, $V_{m-(j-i)}$, is 0, the bit of the delay wave is "0," and therefore equalizer 210 decides the state at time m as state (9).
(II) If $V_{m-(j-i)} = 1$, $|\varphi_1 - \varphi_2| = 0°$ and $U_m \geq C$, equalizer 210 decides the state at time m as state (1).
(III) If $V_{m-(j-i)} = 1$, $|\varphi_1 - \varphi_2| = 180°$, $C > U_m \geq C/2$ and $|a_2|/|a_1| \leq 0.5$, equalizer 210 decides the state at time m as state (2).

(IV) If $V_{m-(j-i)}$=1, $|\varphi_1-\varphi_2|$=180°, $U_m$<C/2 and $|a_2|/|a_1|$>0.5, equalizer 210 decides the state at time m as state (2).

(V) If $V_{m-(j-i)}$=1, $|\varphi_1-\varphi_2|$=0°, C>$U_m$≥C/2 and $|a_2|/|a_1|$≥0.5, equalizer 210 decides the state at time m as state (5).

(VI) If $V_{m-(j-i)}$=1, $|\varphi_1-\varphi_2|$=0°, $U_m$<C/2 and $|a_2|/|a_1|$<0.5, equalizer 210 decides the state at time m as state (5).

(VII) If $V_{m-(j-i)}$=1, $|\varphi_1-\varphi_2|$=180°, C>$U_m$≥C/2 and $|a_2|/|a_1|$≥0.5, equalizer 210 decides the state at time m as state (6).

(VIII) If $V_{m-(j-i)}$=1, $|\varphi_1-\varphi_2|$=180°, $U_m$<C/2 and $|a_2|/|a_1|$<0.5, equalizer 210 decides the state at time m as state (6).

As described above, according to the present embodiment, equalizer 210 detects at least one of: the values d(k) (where k=1, 2, ..., L) of L (L≤N) items of differential information values extracted from N items of differential information calculated in adder 606; their absolute values |d(k)|; the polarities of the signs of d(k); positions r(k) at which these items of differential information are extracted; and phase information φ(k). Further, based on that detection result and demodulation result (i.e. the binarization result in the present embodiment), equalizer 210 identifies the interference state between the direct wave and the indirect wave (i.e. the interference state specified by bit values of the direct wave, bit values of the indirect wave and the phase difference between the direct wave and the indirect wave). Further, equalizer 210 corrects the amplitude of diction signal 801 based on the interference state.

That is, equalizer 210 detects at least one of: the values d(k) of L (L≤N) items of differential information extracted from N items of differential information calculated in adder 606; their absolute values |d(k)|; the polarities of the signs of d(k); positions r(k) at which these items of differential information are extracted; and phase information φ(k), and corrects the amplitude of detection signal 801 based on that detection result and demodulation result.

Thus, the amplitude of detection signal 801 is corrected depending on the interference state between the direct wave and the delay wave, so that it is possible to improve the bit error rate in a binarization result.

(Embodiment 3)

In Embodiment 2, equalizer 210 corrects the amplitude of detection signal 801 depending on bits of the direct wave, bits of the delay wave and the phase difference between the direct wave and the delay wave. By contrast with this, with Embodiment 3, threshold control section 902, which will be described later, controls threshold th in binarizing section 808 depending on bits of the direct wave, bits of the delay wave and the phase difference between the direct wave and the delay wave.

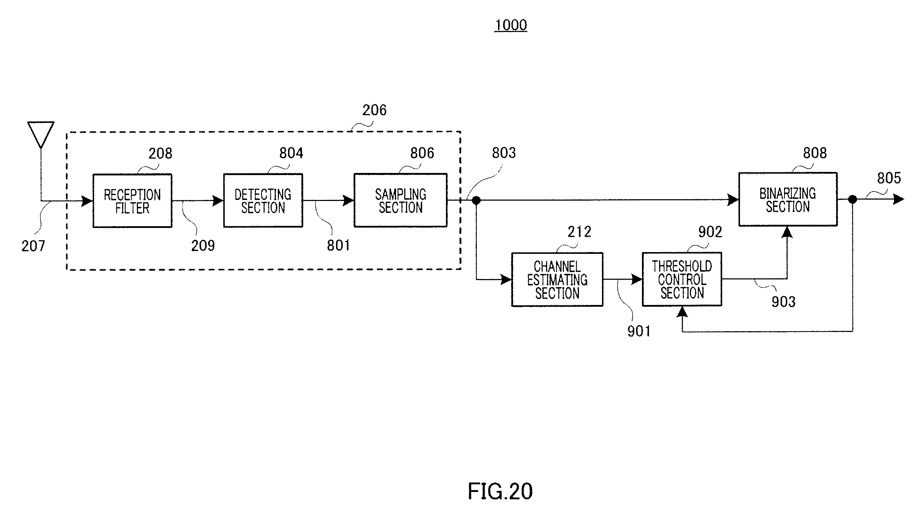

FIG.20 is a block diagram showing the configuration of radio receiving apparatus 1000 according to Embodiment 3 of the present invention. This differs from radio receiving apparatus 800 of Embodiment 2 in providing threshold control section 902 instead of equalizer 210.

Threshold control section 902 outputs threshold control signal 903 based on bits of the direct wave, bits of the delay wave and the phase difference between the direct wave and the delay wave, to binarizing section 808.

The operations of threshold control section 902 will be explained below.

In the same way as in equalizer 210 of Embodiment 2, threshold control section 902 identifies between states (1), (2), (5), (6) and (9), using above decision conditions (I) to (VIII). Further, in response to states (1), (2), (5), (6) and (9), threshold control section 902 performs threshold control as follows.

(Case A)

Above states (1), (5) and (6) show the state where the amplitude of a received signal is increased by interference by the delay wave. Therefore, it is possible to apply the same threshold control.

Referring to state (1) as an example, C is represented by following equation 14.

[14]

$$C = D \times \frac{|a_1|}{|a_1| + |a_2|} \quad \dots (\text{Equation } 14)$$

When this equation 14 is rewritten with respect to D, following equation 15 is found.

[15]

$$D = C \times \frac{|a_1| + |a_2|}{|a_1|} \quad \dots (\text{Equation } 15)$$

Optimal threshold T is D/2 and therefore can be calculated by equation 16.

$$[16]$$

$$T = \frac{D}{2} = \frac{C}{2} \times \frac{|a_1| + |a_2|}{|a_1|} = th \times \frac{|a_1| + |a_2|}{|a_1|} \quad \dots (\text{Equation } 16)$$

Thus, threshold control section 902 controls a threshold. That is, threshold control section 902 controls a setting threshold such that the relationship between the amplitude of detection signal 801 and the setting threshold set in binarizing section 808 matches the relationship between amplitude D in an ideal state without interference by the delay wave and threshold th (i.e. D/2).

(Case B)

If state (2) is detected, C is represented by following equation 17.

$$[17]$$

$$C = E \times \frac{|a_1|}{|a_1| - |a_2|} \quad \dots (\text{Equation } 17)$$

When this equation is rewritten with respect to E, following equation 18 is found.

$$[18]$$

$$E = C \times \frac{|a_1| - |a_2|}{|a_1|} \quad \dots (\text{Equation } 18)$$

Optimal threshold T is E/2 and therefore can be calculated by equation 19.

$$[19]$$

$$T = \frac{E}{2} = \frac{C}{2} \times \frac{|a_1| - |a_2|}{|a_1|} = th \times \frac{|a_1| - |a_2|}{|a_1|} \quad \dots (\text{Equation } 19)$$

Thus, threshold control section 902 controls a threshold.

(Case C)

If state (9) is detected, a bit of the delay wave is "0," and therefore the direct wave is not influenced by interference. Therefore, threshold T=th remains.

As described above, according to the present embodiment, threshold control section 902 extracts L (L≤N) items of differential information from N items of differential information calculated in adder 606, and detects at least one of: the values d(k) of L items of differential information; their absolute values |d(k)|; the polarities of the signs of d(k); positions r(k) at which these items of differential information are extracted; and phase information φ(k). Further, based on that detection result and demodulation result (i.e. the binarization result in the present embodiment), threshold control section 902 identifies the interference state between the direct wave and the indirect wave (i.e. the interference state specified by bit values of the direct wave, bit values of the indirect wave and the phase difference between the direct wave and the indirect wave). Further, threshold control section 902 corrects the threshold in diction signal 808 depending on the interference state.

That is, threshold control section 902 extracts L (L≤N) items of differential information from N items of differential information calculated in adder 606, detects at least one of: the values d(k) of L items of differential information; their absolute values |d(k)|; the polarities of the signs of d(k); positions r(k) at which these items of differential information are extracted; and phase information φ(k), and corrects the threshold in binarizing section 808 based on that detection result and demodulation result.

Thus, threshold th in binarizing section 808 is corrected depending on the interference state between the direct wave and the delay wave, so that it is possible to improve the bit error rate in the binarization result.

(Embodiment 4)

With Embodiment 4, a method of improving the accuracy of channel estimation in a channel estimating section, which was described in Embodiments 1 to 3, will be explained.

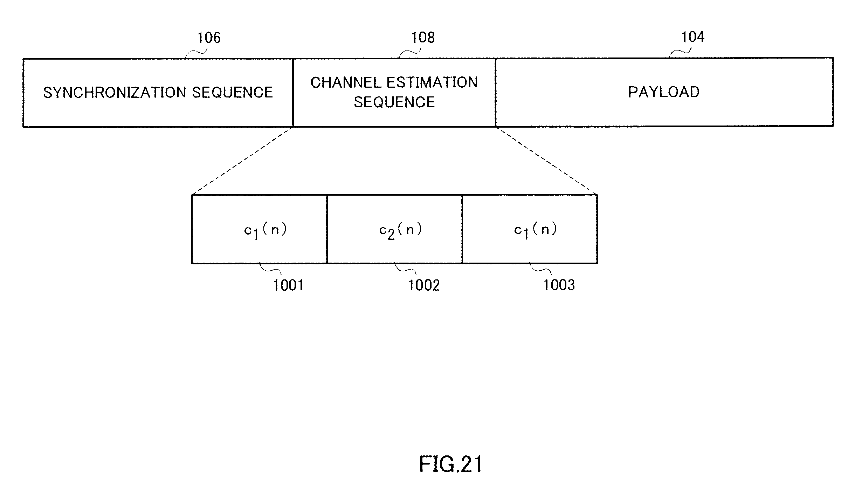

FIG.21 shows the frame configuration of transmission data according to Embodiment 4 of the present invention. Channel estimation sequence 108 is formed with subsequence 1001, subsequence 1002 and subsequence 1003. Channel estimation sequence 108 is formed in forming section 400.

Here, $C_1(n)$ (i.e. subsequence 1001 and subsequence 1003) and $C_2(n)$ (i.e. subsequence 1002) have the same relationship as the relationship between subsequence $a_1(n)$ and subsequence $a_2(n)$ in Embodiment 1. That is, subsequences $C_1(n)$ and $C_2(n)$ are generated from channel estimation sequence C(n) of a length of N bits prepared for BPSK. Also, bits are inverted between $C_1(n)$ and $C_2(n)$.

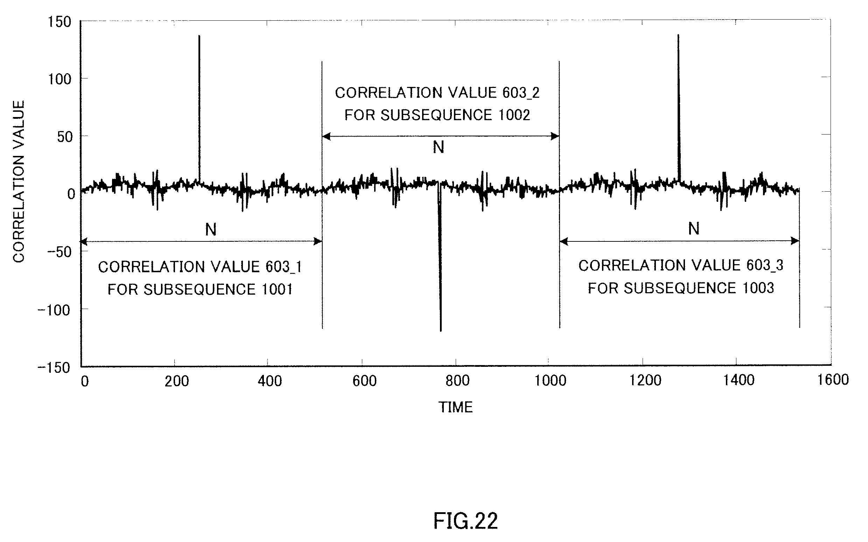

FIG.22 shows an example of correlation value 603 acquired in correlation calculating section 602.

In FIG.22, first N correlation values 603-1 are the correlation values for subsequence 1001, next N correlation values 603_2 are the correlation values for subsequence 1002, and last N correlation values 603_3 are the correlation values for subsequence 1003.

Bits are inverted between subsequence 1002 and subsequences 1001 and 1003, and therefore correlation value 603_2 and correlation values 603_1 and 603_3 are inverted from each other.

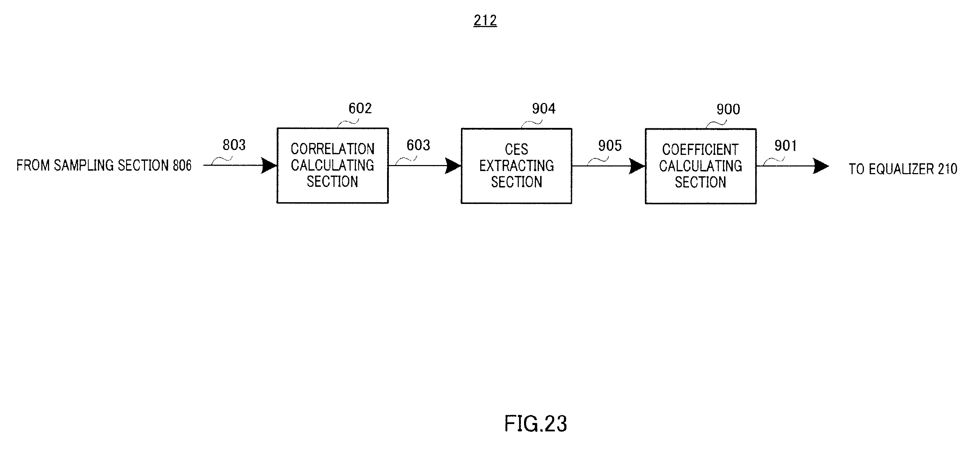

FIG.23 shows the configuration of channel estimating section 212 according to Embodiment 4. Channel estimating section 212 in Embodiment 4 differs from channel estimating section 212 in providing channel estimation sequence ("CES") extracting section 904 instead of delay section 604.

Referring to the frame configuration in FIG.21, channel estimation sequence 108 is sandwiched between synchronization sequence 106 and payload 104. A local sequence for a subsequence candidate of length N is shifted in stages, so that the correlation calculation in correlation calculating section 602 is performed per stage. Therefore, the first-half N/2 correlation values of correlation values 603_1 include the correlation values between synchronization sequence 106 and local sequence C(n). Also, the second-half N/2 correlation values of correlation values 603_3 include the correlation values between payload 104 and local sequence C(n).

Therefore, if a channel estimation is performed using the configuration of channel estimating section 212 in Embodiments 1 to 3, the correlation values between sequences that are not essentially used for channel estimation, that is, the correlation values between synchronization sequence 106 and payload 104 are included, and therefore the accuracy of channel estimation degrades.

To improve this degradation, CES extracting section 904 performs the following processing in channel estimating section 212 of Embodiment 4.

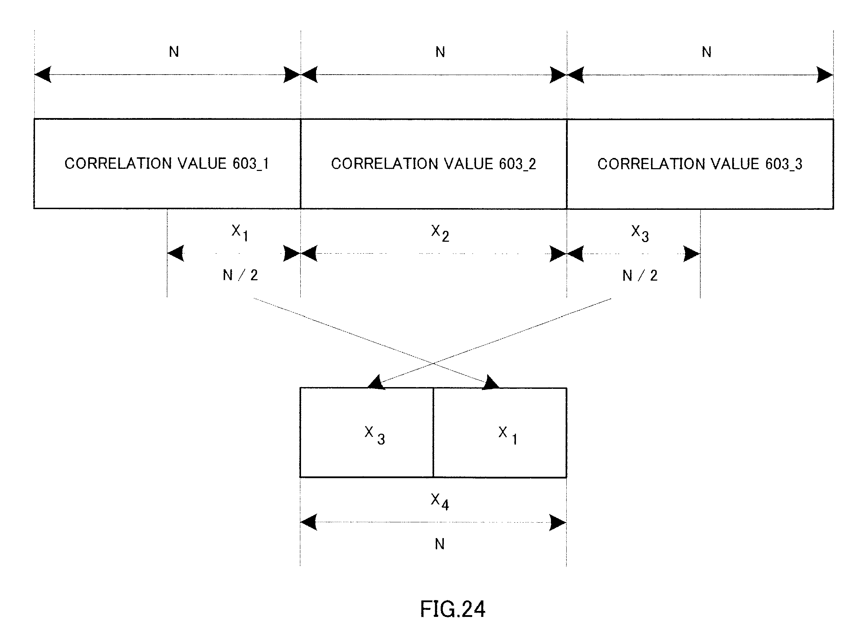

First, as shown in FIG.24, CES extracting section 904 extracts the second-half N/2 correlation values (hereinafter "$X_1$") from correlation values 603_1.

Next, CES extracting section 904 stores the values of correlation values 603_2 (hereinafter "$X_2$").

Next, as shown in FIG.24, CES extracting section 904 extracts the first-half N/2 correlation values (hereinafter "$X_3$") from correlation values 603_3.

Next, as shown in FIG.24, CES extracting section 904 connects $X_1$ behind $X_3$. Here, when the connected correlation value group is expressed as $X_4$, $X_4$ is a sequence of length N.

Finally, CES extracting section 904 calculates difference 905 between $X_4$ and $X_2$.

As described above, CES extracting section 904 forms new correlation value $X_4$ for subsequence $C_1(n)$ using $X_1$ and $X_3$ not including the correlation values of sequences that are not essentially used for channel estimation, and coefficient calculating section 900 calculates channel estimation result 901 using difference 905 between $X_4$ and $X_2$, so that it is possible to improve the accuracy of channel estimation.

Also, when synchronization sequence 106 in FIG.21 is formed with sequences forming a channel estimation sequence such as $C_1(n)$ and $C_2(n)$, it is possible to use correlation calculation result 603 of synchronization sequence 106 for channel estimation. That is, by making the last part of synchronization sequence 106 and the first part of the channel sequence the same subsequence, it is possible to use the first-half N/2 correlation values of correlation values 603_1 for channel estimation, so that it is possible to further improve the accuracy of channel estimation.

(Other embodiment)

The amplitude correction processing and threshold correction processing described in Embodiments 2 and 3 are not limited to the frame configuration described in Embodiments 1 and 4, and can be applicable to general cases where communication is performed in an OOK modulation scheme.

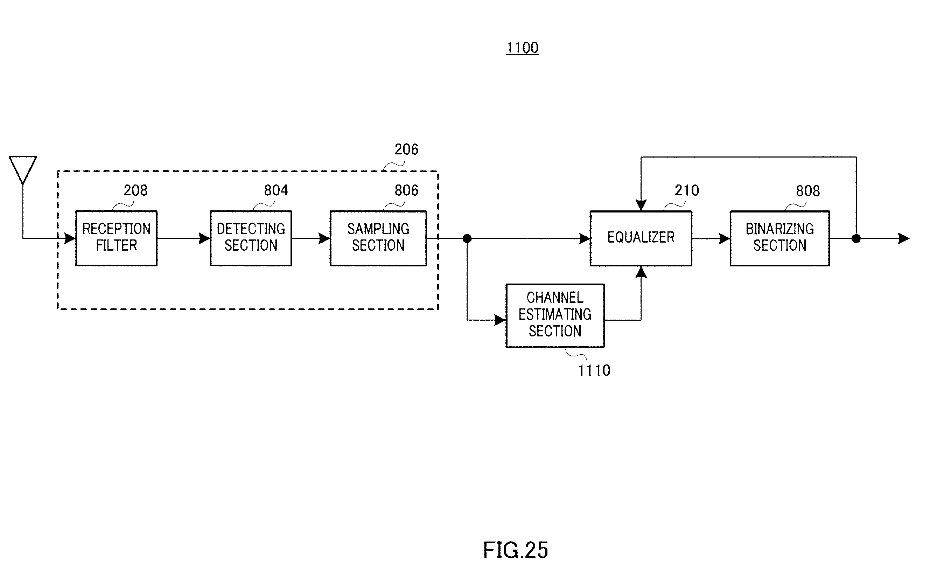

(1) FIG.25 is a block diagram showing the configuration of OOK receiving apparatus 1100. OOK receiving apparatus 1100 has channel estimating section 1110.

OOK receiving apparatus 1100 receives a signal transmitted in an OOK modulation scheme from the transmitting side. This signal transmitted from the transmitting side includes a channel estimation sequence. The received signal subjected to reception processing in radio receiving section 206 is received as input in equalizer 210 and channel estimating section 1110.

Channel estimating section 1110 finds the correlation between the received signal and a local sequence adopting the channel estimation sequence as a base unit. By this means, a delay profile is obtained.

Channel estimating section 1110 calculates coefficients $a_k$, $r_k$ and $\varphi_k$ (i.e. channel estimation result) for the peak that occurs in the delay profile, and outputs these coefficients to equalizer 210.

Based on the demodulation result at the timing preceding the current time by the time difference between the timing at which the peak for the direct wave occurs and the timing at which the peak for the delay wave occurs, equalizer 210 detects the bit of that delay wave. Further, based on that detection result (i.e. a bit of the delay wave), the phase difference between the direct wave and the delay wave, the sample value acquired by sampling the received signal at the current time and the comparison between the amplitude of the peak for the direct wave and the amplitude of the peak for the delay wave, equalizer 210 determines the interference state between the direct wave and the indirect wave. That is, equalizer 210 determines an interference state specified by bit values of the direct wave, bit values of the indirect wave and the phase difference between the direct wave and the indirect wave. Further, equalizer 210 corrects the amplitude of detection signal 801 depending on the interference state.

Especially when equalizer 210 decides that a bit of the delay wave is "1," equalizer 210 performs correction based on the phase difference between the direct wave and the delay wave, the sample value acquired by sampling the received signal at the current time and the comparison between the amplitude of the peak for the direct wave and the amplitude of the peak for the delay wave. Here, if equalizer 210 decides that a bit of the delay wave is 0, equalizer 210 does not perform correction.

Thus, the amplitude of detection signal 801 is corrected depending on the interference state between the direct wave and the delay wave, so that it is possible to improve the bit error rate in a binarization result.

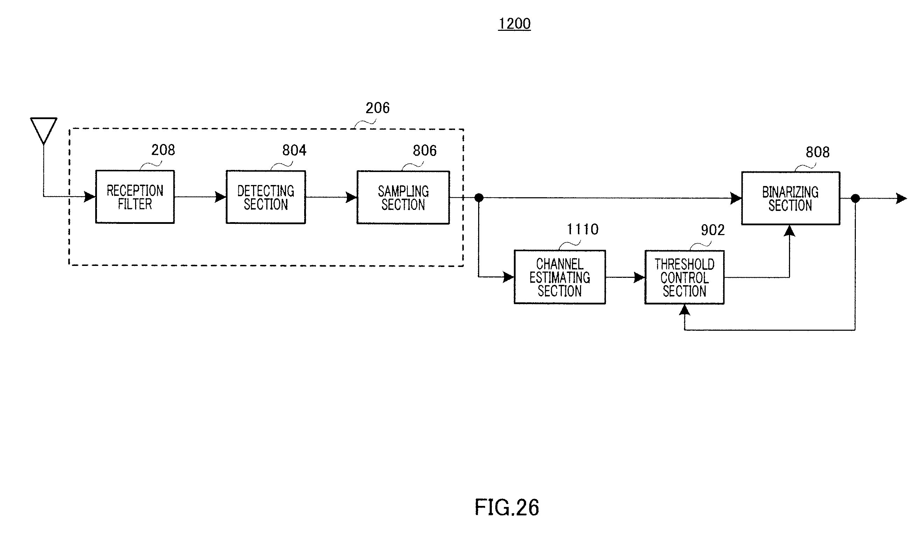

(2) FIG.26 is a block diagram showing the configuration of OOK receiving apparatus 1200. OOK receiving apparatus 1200 has channel estimating section 1110.

OOK receiving apparatus 1100 receives a signal transmitted in an OOK modulation scheme from the transmitting side. The signal transmitted from the transmitting side includes a channel estimation sequence. The received signal subjected to reception processing in radio receiving section 206 is received as input in channel estimating section 1110 and binarizing section 808.

Channel estimating section 1110 finds the correlation between the received signal and a local sequence adopting the channel estimation sequence as a base unit. By this means, a delay profile is obtained.

Channel estimating section 1110 calculates coefficients $a_k$, $r_k$ and $\varphi_k$ (i.e. channel estimation result) for the peak that occurs in the delay profile, and outputs these coefficients to threshold control section 902.

Based on the demodulation result at the timing preceding the current time by the time difference between the timing at which the peak for the direct wave occurs and the timing at which the peak for the delay wave occurs, threshold control section 902 detects the bit of that delay wave.

Further, based on that detection result (i.e. a bit of the delay wave), the phase difference between the direct wave and the delay wave, the sample value acquired by sampling the received signal at the current time and the comparison between the amplitude of the peak for the direct wave and the amplitude of the peak for the delay wave, threshold control section 902 determines the interference state between the direct wave and the indirect wave. That is, threshold control section 902 determines an interference state specified by bit values of the direct wave, bit values of the indirect wave and the phase difference between the direct wave and the indirect wave. Further, threshold control section 902 corrects the threshold in binarizing section 808 depending on the interference state.

Especially when threshold control section 902 decides that a bit of the delay wave is "1," threshold control section 902 performs correction based on the phase difference between the direct wave and the delay wave, the sample value acquired by sampling the received signal at the current time and the comparison between the amplitude of the peak for the direct wave and the amplitude of the peak for the delay wave. Here, if threshold control section 902 decides that a bit of the delay wave is 0, threshold control section 902 does not perform correction.

Thus, threshold th in binarizing section 808 is corrected depending on the interference state between the direct wave and the delay wave, so that it is possible to improve the bit error rate in a binarization result.

Also, all or part of the drawings are schematically illustrated for the purpose of explanation, and do not necessarily show the actual relative scales or positions of the elements in the drawings. Assume that these drawings are provided for explaining at least one embodiment of the present invention and do not limit the scope or concept of the claims.

The disclosures of Japanese Patent Application No.2007-311624, filed on November 30, 2007, and Japanese Patent Application No.2008-021786, filed on January 31, 2008, including the specifications, drawings and abstracts, are included herein by reference in their entireties.

Industrial Applicability

The radio communication method, radio transmitting apparatus and radio receiving apparatus are available for realizing comparable performance to the performance of reception processing in a second modulation scheme, by adopting a sequence that is used in reception processing in the first modulation scheme, where the sequence can be generated from a sequence that is prepared for reception processing and that is used in the second modulation scheme.

**Claims**

1. A communication method for transmitting a first sequence by a first modulation scheme between a radio transmitting apparatus and a radio receiving apparatus, for signal processing in a communication system, the method comprising the steps of:

   in the radio transmitting apparatus, transmitting subsequence $a_1(n)$ and subsequence $a_2(n)$ as the first sequence, subsequence $a_1(n)$ being the same as second sequence $a(n)$ designed for a second modulation scheme, and subsequence $a_2(n)$ comprising inverted bits as compared with second sequence $a(n)$; and
   in the radio receiving apparatus, detecting subsequence $a_1(n)$ and subsequence $a_2(n)$ from a received signal and passing a detection result to subsequent processing for the signal processing.

2. A radio transmitting apparatus that transmits a first sequence by a first modulation scheme, the apparatus comprising:

   a modulating section that receives as input subsequence $a_1(n)$ and subsequence $a_2(n)$ as the first sequence, subsequence $a_1(n)$ being the same as second sequence $a(n)$ designed for a second modulation scheme, and subsequence $a_2(n)$ comprising inverted bits as compared with second sequence $a(n)$, and that modulates the first sequence by the first modulation scheme; and
   a radio transmitting section that up-converts and radio-transmits the modulated first sequence.

3. The radio transmitting apparatus according to claim 2, wherein the first sequence is one of a channel estimation sequence for estimating a channel characteristic between the radio transmitting apparatus and a receiving side and a synchronization sequence for establishing synchronization between the radio transmitting apparatus and the receiving side.

4. The radio transmitting apparatus according to claim 2, wherein the first modulation scheme is an on-off keying modulation scheme and the second modulation scheme is a phase shift keying modulation scheme.

5. The radio transmitting apparatus according to claim 2, wherein second sequence $a(n)$ is one of a Frank-Zadoff complementary sequence and a Golay complementary sequence.

6. The radio transmitting apparatus according to claim 2, further comprising:

   a storage section that stores second sequence $a(n)$; and
   a sequence forming section that acquires stored second sequence $a(n)$, generates subsequence $a_2(n)$ by inverting bits of second sequence $a(n)$, and outputs second sequence $a(n)$ and subsequence $a_2(n)$ to the modulating section.

7. The radio transmitting apparatus according to claim 2, wherein second sequence $a(n)$ is derived from third sequence $b(n)$ designed for a third modulation scheme.

8. The radio transmitting apparatus according to claim 7, wherein the third modulation scheme is 16 phase shift keying modulation.

9. The radio transmitting apparatus according to claim 7, wherein, in the derivation, a first bit value is set in second sequence a(n) if a real part of third sequence b(n) is greater than an imaginary part of third sequence b(n) or the real part and the imaginary part of third sequence b(n) are both equal to or greater than 0, and a second bit value is set in second sequence a(n) if the real part of third sequence b(n) is less than the imaginary part of third sequence b(n) or the real part and the imaginary part of third sequence b(n) are both equal to or less than 0.

10. A radio receiving apparatus that receives a first sequence transmitted by a first modulation scheme, performs a channel estimation based on a received signal and demodulates the received signal based on a result of the channel estimation, the apparatus comprising:

   a radio receiving section that receives a signal including subsequence $a_1(n)$ and subsequence $a_2(n)$ in a consecutive order, subsequence $a_1(n)$ being the same as second sequence a(n) designed for a second modulation scheme, and subsequence $a_2(n)$ comprising inverted bits as compared with second sequence a(n); and
   a channel estimating section that comprises: a correlation calculating section that finds correlations between the received signal received in the radio receiving section and sequence q(n) adopting second sequence a(n) as a base unit; and a calculating section that calculates a difference between a correlation result related to subsequence $a_1(n)$ and a correlation result related to subsequence $a_2(n)$, among the correlation results acquired in the correlation calculating section.

11. The radio receiving apparatus according to claim 10, wherein the channel estimating section extracts L (L≤N) items of differential information from N items of differential information calculated in the calculating section, the radio receiving apparatus further comprising a correcting section that detects at least one of values d(k) of the L items of differential information extracted in the channel estimating section, their absolute values |d(k)|, polarities of signs of d(k), positions r(k) at which the differential information is extracted and phase information φ(k), and that, based on the detection result and the demodulation result, corrects an amplitude of the received signal or a decision threshold used for demodulation processing, where k=1, ..., L.

12. The radio receiving apparatus according to claim 11, wherein the channel estimating section decides φ(k) as a first phase value if value d(k) of the differential information is greater than 0, and decides φ(k) as a second phase value if value d(k) of the differential information is less than 0.

13. The radio receiving apparatus according to claim11, wherein:

   a value of L is 2; and
   the correcting section detects a bit of a delay wave based on a demodulation result at a timing preceding a current time by a time difference between a timing at which the differential information for a direct wave is acquired and a timing at which the differential information for the delay wave is acquired, and, if the bit of the delay wave is 1, performs correction depending on a phase difference between the direct wave and the delay wave, a sample value acquired by sampling the received signal at the current time and a comparison between the differential information for the direct wave and the differential information for the delay wave.

14. A radio receiving apparatus that receives as input a first sequence transmitted by a first modulation scheme, performs a channel estimation based on a received signal and demodulates the received signal based on a result of the channel estimation, the apparatus comprising:

   a radio receiving section that receives a signal including subsequence $a_1(n)$ and subsequence $a_2(n)$ in a state where subsequence $a_1(n)$ is placed before and after subsequence $a_2(n)$, subsequence $a_1(n)$ being the same as second sequence a(n) designed for a second modulation scheme, and subsequence $a_2(n)$ comprising inverted bits as compared with second sequence a(n); and
   a channel estimating section that comprises: a correlation calculating section that finds correlations between the received signal received in the radio receiving section and sequence q(n) adopting second sequence a(n) as a base unit; and a calculating section that calculates a difference between a correlation result related to subsequence $a_1(n)$ and a correlation result related to subsequence $a_2(n)$, among correlation results acquired in the correlation calculating section.

15. The radio receiving apparatus according to claim 14, wherein the calculating section extracts a second half part of a correlation value group related to subsequence $a_1(n)$ placed before subsequence $a_2(n)$ and a first half part of a correlation value group related to subsequence $a_1(n)$ placed after subsequence $a_2(n)$, and calculates a difference between the correlation result related to subsequence $a_2(n)$ the extracted correlation value groups.

EP 2 216 950 A1

100

102

PREAMBLE

106 108 104

| SYNCHRONIZATION SEQUENCE | CHANNEL ESTIMATION SEQUENCE | PAYLOAD |

DATA PACKET

TIME

FIG.1

FIG.2

EP 2 216 950 A1

<u>400</u>

402  SUBSEQUENCE $a_1(n)$

410

SEQUENCE $a(n)$

201

406

404

408

INVERTER

SUBSEQUENCE $a_2(n)$

FIG.3

FIG.4

EP 2 216 950 A1

START

GENERATE TWO SUBSEQUENCES $a_1(n)$ AND $a_2(n)$ FROM BPSK SEQUENCE $a(n)$ — S302

TRANSMIT TWO SUBSEQUENCES $a_1(n)$ AND $a_2(n)$ BY OOK MODULATOR — S304

RECEIVE TWO SUBSEQUENCES $a_1(n)$ AND $a_2(n)$ BY OOK RECEIVER — S306

DETECT TWO SUBSEQUENCES $a_1(n)$ AND $a_2(n)$ AND COMBINE DETECTION RESULTS — S308

END

FIG.5

EP 2 216 950 A1

502

SEQUENCE a(n)
(SEQUENCE LENGTH N)

· · · · · ·        · · · · · ·

504

BPSK MODULATOR

TIME

## FIG.6A

508

SUBSEQUENCE $a_2(n)$
(SEQUENCE LENGTH N)

506

SUBSEQUENCE $a_1(n)$
(SEQUENCE LENGTH N)

· · · · · ·        · · · · · ·

510

OOK MODULATOR

TIME

## FIG.6B

EP 2 216 950 A1

DIRECT WAVE          701

20

REFLECTED WAVE

800

703

702

REFLECTOR

FIG.7

FIG.8

EP 2 216 950 A1

FROM SAMPLING SECTION 806 ⟶ | 602 CORRELATION CALCULATING SECTION | 603 ● ⟶ 606 ⊕ 607 ⟶ | 900 COEFFICIENT CALCULATING SECTION | ⟶ TO EQUALIZER 210

803

DELAY SECTION 604

605

901

FIG.9

EP 2 216 950 A1

FIG.10

FIG.11

0          1          0

A

DIRECT WAVE

INTERFERENCE

A+B

SYNTHESIZED WAVE

0          1          0

B

DELAY WAVE (PHASE DIFFERENCE OF 0 DEGREES)

FIG.12

FIG.13

0      1      0

A

DIRECT WAVE

INTERFERENCE

A－B

SYNTHESIZED WAVE

0      1      0

B

DELAY WAVE (PHASE DIFFERENCE OF 180 DEGREES)

FIG.14

FIG.15

FIG.16

0        1        0

th - - - - - - - - - - - - - - - - - - - - - - -

F

C / 2

FIG.17

DIRECT WAVE

DELAY WAVE (PHASE DIFFERENCE OF 180 DEGREES)

INTERFERENCE

SYNTHESIZED WAVE

FIG.18

0      1      0

th

G

C / 2

FIG.19

FIG.20

EP 2 216 950 A1

106                    108                    104

| SYNCHRONIZATION SEQUENCE | CHANNEL ESTIMATION SEQUENCE | PAYLOAD |

| $c_1(n)$ | $c_2(n)$ | $c_1(n)$ |

1001          1002          1003

FIG.21

FIG.22

212

FROM SAMPLING SECTION 806 →803→ CORRELATION CALCULATING SECTION 602 →603→ CES EXTRACTING SECTION 904 →905→ COEFFICIENT CALCULATING SECTION 900 →901→ TO EQUALIZER 210

FIG.23

EP 2 216 950 A1

EP 2 216 950 A1

N | N | N

| CORRELATION VALUE 603_1 | CORRELATION VALUE 603_2 | CORRELATION VALUE 603_3 |

$X_1$   $X_2$   $X_3$

$N / 2$   $N / 2$

| $X_3$ | $X_1$ |

$X_4$

N

FIG.24

FIG.25

EP 2 216 950 A1

EP 2 216 950 A1

1200

206

208          804          806

| RECEPTION FILTER | DETECTING SECTION | SAMPLING SECTION |

808

BINARIZING SECTION

1110          902

| CHANNEL ESTIMATING SECTION | THRESHOLD CONTROL SECTION |

FIG.26

## INTERNATIONAL SEARCH REPORT

| | International application No. |
|---|---|
| | PCT/JP2008/003505 |

**A. CLASSIFICATION OF SUBJECT MATTER**
*H04L27/02(2006.01)i*

According to International Patent Classification (IPC) or to both national classification and IPC

**B. FIELDS SEARCHED**

Minimum documentation searched (classification system followed by classification symbols)
H04L27/02, H04J13/00

Documentation searched other than minimum documentation to the extent that such documents are included in the fields searched

| Jitsuyo Shinan Koho | 1922-1996 | Jitsuyo Shinan Toroku Koho | 1996-2009 |
|---|---|---|---|
| Kokai Jitsuyo Shinan Koho | 1971-2009 | Toroku Jitsuyo Shinan Koho | 1994-2009 |

Electronic data base consulted during the international search (name of data base and, where practicable, search terms used)
IEEE

**C. DOCUMENTS CONSIDERED TO BE RELEVANT**

| Category* | Citation of document, with indication, where appropriate, of the relevant passages | Relevant to claim No. |
|---|---|---|
| A | JP 2007-251486 A  (Seiko Epson Corp.), 27 September, 2007 (27.09.07), Abstract (Family: none) | 1-15 |
| A | JP 5-103023 A  (Matsushita Electric Industrial Co., Ltd.), 23 April, 1993 (23.04.93), Abstract (Family: none) | 1-15 |
| A | WO 2007/052355 A1  (Matsushita Electric Industrial Co., Ltd.), 10 May, 2007 (10.05.07), Abstract & EP 1928119 A1 | 1-15 |

☒ Further documents are listed in the continuation of Box C.  ☐ See patent family annex.

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 19 January, 2009 (19.01.09) | 03 February, 2009 (03.02.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
| --- |
| PCT/JP2008/003505 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | WO 2005/022799 A1  (Sony Corp.),<br>10 March, 2005 (10.03.05),<br>Abstract<br>& US 2005/0259759 A1    & US 2006/0154624 A1<br>& EP 1659721 A1        & KR 10-2006-0119899 A<br>& CN 1842981 A | 1-15 |
| P,A | WO 2007/148732 A1  (Matsushita Electric<br>Industrial Co., Ltd.),<br>27 December, 2007 (27.12.07),<br>Abstract<br>& JP 2008-28999 A | 1-15 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7046748 B
- JP 2007311624 A
- JP 2008021786 A